# EUROPÄISCHE PATENTSCHRIFT

(11) **EP 3 374 193 B1**
(45) Veröffentlichungstag und Bekanntmachung des Hinweises auf die Patenterteilung: **10.01.2024**
(21) Anmeldenummer: 16795231.6
(22) Anmeldetag: 09.11.2016
(51) Int. Cl.: C08G 18/38, C08G 18/75, C08G 18/79, C08K 3/013, C08L 61/28, C09D 11/50, C09K 11/06, C09B 67/22, C09B 67/08, C09B 67/02, C09D 11/037, B42D 25/387, C08K 5/00, C08L 33/12, C08L 75/02, C09K 11/02, D21H 21/40, G07D 7/1205, G07D 7/00

(54) **PIGMENTSYSTEM, LUMINESZENZFARBSYSTEM UND WERTDOKUMENT**
PIGMENT SYSTEM, LUMINESCENT DYE SYSTEM, AND VALUE DOCUMENT
SYSTÈME PIGMENTAIRE, SYSTÈME DE COLORATION LUMINESCENT ET DOCUMENT DE VALEUR

(30) Priorität: 11.11.2015 DE 102015014560
(43) Veröffentlichungstag der Anmeldung: 19.09.2018
(73) Patentinhaber: Giesecke+Devrient Currency Technology GmbH, 81677 München (DE)
(72) Erfinder: KECHT, Johann, 81677 München (DE); SCHLOSSBAUER, Axel, 80799 München (DE); GIERING, Thomas, 85614 Kirchseeon (DE)
(74) Vertreter: Giesecke + Devrient IP
(86) Internationale Anmeldenummer: PCT/EP2016/001863
(87) Internationale Veröffentlichungsnummer: WO 2017/080654

(56) Entgegenhaltungen:
- EP-A2- 1 826 730
- WO-A1-2008/141972
- DE-A1-102012 013 244

## Beschreibung

Die Erfindung betrifft ein Pigmentsystem und ein Wertdokument, z.B. eine Banknote.

Die Erfindung betrifft insbesondere ein Lumineszenzfarbsystem, das auf organischen Kapsel-Lumineszenzpigmenten basiert.

Das erfindungsgemäße Pigmentsystem zeichnet sich dadurch aus, dass die unterschiedlichen Lumineszenzpigmente, die das Lumineszenzfarbsystem erstellen, jeweils vergleichbare chemische und physikalische Stabilitäten aufweisen. Hierdurch wird eine ungleichmäßige Veränderung des Lumineszenz-Farbeindrucks durch chemische oder physikalische Faktoren (z.B. Migration, Umwelteinflüsse, organische Lösungsmittel, Säuren und Basen, UV-Bestrahlung, Tageslicht) verhindert. Das Lumineszenzfarbsystem wird insbesondere für die Herstellung von Wertdokumenten, z.B. durch das Bedrucken geeigneter Substrate, eingesetzt.

Verschiedene Absorptions-Farbsysteme für normale Druckfarben sind im Stand der Technik bekannt, z.B. auf Basis von CMYK-Farben. Ebenso existieren im Stand der Technik spezielle Absorptions-Farbsysteme für den Einsatz als Sicherheitsfarben in Wertdokumenten. Beispielsweise beschreibt die EP 1308485 A1 ein 4-Farben-Druckfarbensystem mit angepassten IR-Absorptionen.

Diese "normalen" Absorptions-Farben erzeugen einen Farbeindruck durch Absorption bestimmter Wellenlängenanteile des zurückgestreuten Lichts, man spricht daher bei CYMK-Systemen etc. von subtraktiver Farbmischung.

Lumineszenzfarbsysteme lassen sich analog aufbauen, nur dass hierbei der Farbeindruck einer Lumineszenzemission (z.B. während der UV-Anregung) verwendet wird. Es handelt sich daher bei Lumineszenzfarben meistens um RGB-Farbsysteme, weil der optisch wahrnehmbare Farbeindruck hierbei durch additive Farbmischung der verschiedenen Emissionsfarben erzeugt wird.

Um verschiedenfarbige Farbeindrücke der Lumineszenz in einem farbigen Lumineszenzbild zu erreichen, werden häufig verschiedene unterschiedlich aufgebaute und unterschiedlich stabile Lumineszenzstoffe eingesetzt. Beispielsweise wird eine rote Farbe einer Flagge im Lumineszenzbild mit einem ersten Lumineszenzstoff erzeugt und eine daneben liegende grüne Farbe einer Flagge im Lumineszenzbild mit einem zweiten Lumineszenzstoff erzeugt. Durch die Verwendung unterschiedlicher Lumineszenzstoffe verhalten sich diese gegenüber physikalischen und chemischen Einflüssen unterschiedlich, was mit der Zeit oder im Zuge von physikalischen und/ oder chemischen Einflüssen zu einer Veränderung des Lumineszenzbildes führt. Ein solcher Effekt ist auch bei normalen Absorptions-Farbsystemen bekannt und führt neben einem Ausbleichen des Bildes auch zu starken, unerwünschten Farbverschiebungen. Ein weiterer Nachteil eines derart aufgebauten Lumineszenzbildes ist, dass die farbgebenden Lumineszenzstoffe aufgrund ihrer unterschiedlichen Eigenschaften nicht frei mischbar sind oder sich im Druckprozess entmischen. Dies macht das Einstellen der gewünschten Lumineszenzbildfarben (Color Management) schwierig oder unmöglich.

Es ist daher wünschenswert, ein Lumineszenzfarbsystem bereitzustellen, das sich stabil herstellen lässt und mit dem sinnvolle Referenzen erstellt werden können.

Weiterhin werden im Stand der Technik sogenannte Echtfarbenlumineszenzbilder benutzt. Darunter versteht man komplexere, mehrfarbige Lumineszenzbilder, die z.B. auch Farbverläufe zeigen können. Häufig werden diese mit einem (absorptionsfarbenbasierten) Bild kombiniert, so dass man z.B. ein einfarbiges Portrait auf einer Banknote sieht, welches unter UV-Beleuchtung mehrfarbig, sozusagen in Farben ähnlich einer Photographie, luminesziert.

Aufgrund der Notwendigkeit, hierbei mehrere unterschiedliche Lumineszenzstoffe zu benutzen, die gleichzeitig bzw. miteinander aufgedruckt werden müssen, werden die oben genannten Nachteile hier noch einmal potenziert (da kein einheitliches Farbformulierungssystem vorliegt und keine einheitliche Stabilität für die verschiedenen Lumineszenzstoffe gegeben ist). Dies verhindert den praktikablen Einsatz von Echtfarbenfluoreszenzbildern als Sicherheits- und Designelement.

Die erfindungsgemäßen Lumineszenzfarbsysteme zeigen diese Nachteile jedoch nicht, daher sind hier komplexe Echtfarbenlumineszenzbilder mit nur einem Farbformulierungssystem und gleichartigen Stabilitäten aller (Misch-) Farben möglich.

Im Stand der Technik ist auch die Verwendung von anorganischen Lumineszenzpigmenten bekannt. Diese besitzen zwar meistens exzellente Stabilitäten, haben im Vergleich zu den typischerweise verwendeten organischen Lumineszenzstoffen jedoch deutlich geringere Lumineszenzintensitäten. Weiterhin zeigen anorganische Leuchtstoffe aufgrund ihrer unterschiedlichen Dichten, Oberflächenladungen, Korngrößen, Partikelformen etc. weiterhin den Nachteil, dass verschiedene Farbformulierungen notwendig sind bzw. unterschiedliche Pigmente sich beim Verdrucken unterschiedlich verhalten. Sie sind daher kein geeigneter Ersatz für das erfindungsgemäße Lumineszenzfarbsystem.

Die Schrift EP 2602119 A1 beschreibt ein Lumineszenzfarbsystem mit zwei Farben, welche bei Bestrahlung mit unterschiedlichen Anregungswellenlängen unterschiedliche Fluoreszenz-Emissionen erzeugen. Speziell wird ein System beschrieben, in welchem die Farben bei einzelner Anregung mit UV-A- bzw. UV-C-Strahlung die jeweils gegensätzlichen Emissionsfarben aufweisen (z.B. Farbe 1: Rot/Grün; Farbe 2: Grün/Rot), und daher bei kombinierter Bestrahlung mit beiden Wellenlängen die gleiche Mischfarbe zeigen (Farbe 1 = Farbe 2 = Gelb). Es wird jedoch weder auf die zeitliche und chemische Stabilität der Farbeindrücke, noch auf mögliche Schwierigkeiten beim Druck dieser Muster eingegangen.

Die Schrift WO 2005/062692 A2 beschreibt ein farbkodiertes Latentbild, darunter auch UV-anregbare Latentbilder aus einem RGB-Lumineszenzfarbsystem. Da jedoch keine an die Stabilität angepassten Kapsel-Lumineszenzpigmente, sondern unterschiedliche Lumineszenzfarbstoffe verwendet werden, sind keine einheitlichen (hohen) Chemikalien- und Lichtstabilitäten oder einheitliche Druckeigenschaften gegeben. Die beschriebenen Systeme sind daher den erfindungsgemäßen Systemen aus angepassten Lumineszenzpigmenten mit einheitlichen Eigenschaften unterlegen. Beispielsweise würden sich die in der WO 2005/062692 A2 vorgestellten Latentbilder bei einer Behandlung mit organischen Lösemitteln wie Aceton oder nach längerer UV-Bestrahlung deutlich verfärben, während analoge Latentbilder aus einem Lumineszenzfarbsystem gemäß der vorliegenden Erfindung dies nicht tun.

Die Schrift US 7821675 B2 beschreibt ein additives Farbsystem aus lumineszierenden Ink-Jet-Tinten. Es kann auch zur Absicherung von Wertdokumenten verwendet werden. Die Darstellung von Motiven in Echtfarben-Lumineszenz aus Mischungen der drei Tinten wird ebenfalls beschrieben. Die Angleichung der unterschiedlichen chemischen und physikalischen Stabilitäten der verwendeten organischen und anorganischen lumineszierenden Substanzen wird nicht erwähnt.

In der EP 1346839 A2 werden Systeme aus mindestens zwei Fluoreszenzstoffen mit (strahlendem) Energietransfer beschrieben, bei denen ein Lumineszenzstoff die absorbierte Energie an einen weiteren Lumineszenzstoff weitergibt und diesen damit zur Emission anregt. Diese Systeme sind nicht stabilitätsangepasst.

Die DE 10 2012 013244 A1 beschreibt ein Wertdokument und ein Verfahren zum Überprüfen des Vorliegens desselben, wobei das Wertdokument lumineszierende, partikuläre Agglomerate aufweist, die jeweils mindestens zwei unterschiedliche, mit einer ersten bzw. einer zweiten Emissionswellenlänge emittierende, lumineszierende, feste homogene Phasen beinhalten, wobei bei einer Auswertung von Messwerten, die durch eine an verschiedenen Orten durchgeführte, ortspezifische Messung der ersten Lumineszenzintensität bei der ersten Emissionswellenlänge und der zweiten Lumineszenzintensität bei der zweiten Emissionswellenlänge erhältlich sind, eine statistische Korrelation zwischen den ersten Lumineszenzintensitäten und den zweiten Lumineszenzintensitäten vorliegt.

Die WO 2008/141972 A1 beschreibt Kern-Hülle-Teilchen, die besonders zur Verwendung in Farbzusammensetzungen geeignet sind. Die Kern-Hülle-Teilchen beinhalten einen auf Polymeren oder Copolymeren basierenden Kern, wobei geeignete Polymere und Copolymere nicht nur Additionspolymere und Copolymere aus polymerisierbaren ungesättigten Monomeren, sondern auch Polykondensate und Copolykondensate von Monomeren mit zwei oder mehr reaktiven Gruppen, oder auch Aminoharze und Phenolharze darstellen. Weiterhin beinhalten die Kern-Hülle-Teilchen eine auf einem Matrixmaterial basierende Hülle, wobei geeignete Matrixmaterialien von Additionspolymeren, Copolymeren aus polymerisierbaren ungesättigten Monomeren, Polykondensaten, Copolykondensaten von Monomeren mit zwei oder mehr reaktiven Gruppen, Aminoharzen, Phenolharzen oder Epoxyharzen gewählt werden können.

Die EP 1 826 730 A2 beschreibt ein Sicherheitsmerkmal für Sicherheitspapiere, Wertdokumente und dergleichen mit einem UV-anregbaren organischen Lumineszenzstoff. Das Sicherheitsmerkmal enthält Kern-Hülle-Teilchen, bei denen der organische Lumineszenzstoff als Kern mit einer Hülle beschichtet ist, die die chemische und/ oder physikalische Beständigkeit des Lumineszenzstoffs erhöht.

Der vorliegenden Erfindung liegt die Aufgabe zugrunde, ein gegenüber dem Stand der Technik verbessertes Lumineszenzfarbsystem bereitzustellen.

Diese Aufgabe wird durch die in den unabhängigen Ansprüchen definierten Merkmalskombinationen gelöst. Weiterbildungen der Erfindung sind Gegenstand der Unteransprüche.

### Zusammenfassung der Erfindung

(Erster Aspekt) Pigmentsystem gemäß Anspruch 1.

(Zweiter Aspekt) Farbkonzentrat-Satz gemäß Anspruch 14.

(Dritter Aspekt) Druckfarben-Satz gemäß Anspruch 15.

(Vierter Aspekt) Druckfarbe gemäß Anspruch 16.

(Fünfter Aspekt) Polymermasse gemäß Anspruch 17.

(Sechster Aspekt) Wertdokument, Melierfaser, Sicherheitsfaden oder Sicherheitsfolie gemäß Anspruch 18.

### Ausführliche Beschreibung der Erfindung

Die Erfindung beinhaltet ein Lumineszenzfarbsystem, das auf organischen Kapsel-Lumineszenzpigmenten basiert. Das Lumineszenzfarbsystem zeichnet sich dadurch aus, dass die unterschiedlichen, das Lumineszenzfarbsystem erstellenden Lumineszenzfarben jeweils vergleichbare chemische und physikalische Stabilitäten aufweisen. Hierdurch wird eine ungleichmäßige Veränderung des Lumineszenz-Farbeindrucks durch chemische und physikalische Faktoren (z.B. Migration, Umwelteinflüsse, organische Lösungsmittel, Säuren und Basen, UV-Bestrahlung, Tageslicht) verhindert. Das Lumineszenzfarbsystem wird insbesondere zur Herstellung von Wertdokumenten, z.B. durch Bedrucken geeigneter Wertdokument-Substrate, eingesetzt.

Heute bekannte Mehrfarbenlumineszenzdrucke (z.B. eine Flagge in den Farben Rot-Gelb-Grün oder ein Echtfarbenportrait) können sich durch die oben beschriebenen, chemischen und physikalischen Faktoren verändern, weil sie aus verschiedenen, unterschiedliche Stabilitäten aufweisenden Lumineszenzstoffen bestehen. Beispielsweise ist ein Lumineszenzstoff stabil, während ein anderer keine ausreichende vergleichbare Stabilität aufweist, wodurch in der Anwendung Nachteile entstehen. So kann bei Einwirkung von z.B. organischen Lösemitteln oder UV-Licht eine Lumineszenzfarbe des Lumineszenzfarbsystems stärker verblassen als die anderen. Auf diese Weise ändert sich z.B. der wahrgenommene Farbton, falls es sich um eine Farbmischung handelt.

Bei den erfindungsgemäßen Mehrfarblumineszenzandrucken tritt hingegen keine Änderung auf. Der Farbton verändert sich hier selbst bei starker Beanspruchung nicht, weil alle Lumineszenzfarben des Lumineszenzfarbsystems in gleicher Art und Weise an Intensität verlieren.

Ein weiterer Vorteil des erfindungsgemäßen Lumineszenzfarbsystems besteht darin, dass Lumineszenzstoffe verwendet werden, die sich chemisch und physikalisch vergleichbar verhalten. Damit wird erreicht, dass eine einmal gefundene Lösung ("Color-Management") für das Erreichen eines bestimmten sichtbaren oder messtechnisch erfassbaren Farbtons der Lumineszenz im Zuge der Herstellung der Farbe, des Andrucks und Fortdrucks konstant bleibt und z.B. Entmischungen des Lumineszenzfarbsystems verringert oder vermieden werden.

Bei den Pigmenten des erfindungsgemäßen Lumineszenzfarbsystems handelt es sich um spezielle organische Kern-Hülle-Teilchen mit hohen Lösungsmittelstabilitäten, sogenannte Kapsel-Lumineszenzpigmente. Kapsel-Lumineszenzpigmente bestehen aus einem Kern eines ersten Materials, in welchem ein Lumineszenzfarbstoff verteilt ist, und einer Hülle aus einem zweiten Material. Bevorzugt sind das erste und zweite Material unterschiedliche Polymere.

Es existieren dabei zwei grundlegende Formen von Kapsel-Lumineszenzpigmenten: (a) Kapsel-Lumineszenzpigmente mit einem einzelnen Kern und (b) Kapsel-Lumineszenzpigmente mit mehreren Kernen.

Gemäß einer bevorzugten Ausführungsform handelt es sich bei den Kapsel-Lumineszenzpigmenten des Lumineszenzfarbsystems um Kapsel-Lumineszenzpigmente mit einem einzelnen Kern. Es liegt dabei ein einzelner Kern vor, der von einer Hülle umgeben ist. Hierbei wird ein besonders hoher Schutz gegen Chemikalien erreicht, da die Hülle den Kern homogen umschließen kann. Diese Ausführungsform liefert somit qualitative Vorteile.

Gemäß einer weiteren bevorzugten Ausführungsform handelt es sich bei den Kapsel-Lumineszenzpigmenten des Lumineszenzfarbsystems um Kapsel-Lumineszenzpigmente mit mehreren Kernen. Hierbei liegen mehrere Kerne in einem Hüllmaterial verteilt vor. Da es hier möglich ist, dass sich einzelne Kerne an bzw. nahe der Außenoberfläche befinden und somit weniger Schutz durch die Hülle erfahren, wird hier eine im Vergleich zu Kapsel-Lumineszenzpigmenten mit einem einzelnen Kern weniger starke Schutzwirkung gegen Chemikalien erreicht. Derartige Partikel können jedoch deutlich kostengünstiger hergestellt werden und verfügen immer noch über hohe Chemikalienstabilitäten.

Diese Ausführungsform liefert somit herstellungstechnische Vorteile.

Gemäß einer bevorzugten Ausführungsform weisen alle Kapsel-Lumineszenzpigmente des Lumineszenzfarbsystems die gleiche Hülle auf, wobei die Hülle vorzugsweise auf einem Kondensationspolymer basiert, besonders bevorzugt auf einem Melamin-Formaldehyd-Kondensationspolymer basiert. Bevorzugt handelt es sich dabei um Kapsel-Lumineszenzpigmente mit einem Kern und einer Hülle.

Gemäß einer weiteren bevorzugten Ausführungsform weisen alle Kapsel-Lumineszenzpigmente des Lumineszenzfarbsystems die gleiche Hülle auf, wobei die Hülle vorzugsweise auf einem Additionspolymer basiert, besonders bevorzugt auf einem Isocyanat-basiertem Additionspolymer welches unter anderem Melamin als Monomer enthält. Bevorzugt handelt es sich dabei um Kapsel-Lumineszenzpigmente mit mehreren Kernen und einer Hülle.

Gemäß einer bevorzugten Ausführungsform weisen alle Kapsel-Lumineszenzpigmente des Lumineszenzfarbsystems sehr dicke Hüllen auf, das heißt, der Gewichtsanteil der Hülle relativ zum Gewichtsanteil des Kerns beträgt mehr als 20%, bevorzugt mehr als 30%, besonders bevorzugt mehr als 50%.

Im Folgenden werden drei bevorzugte Varianten genannt, welche geeignete Kapsel-Lumineszenzpigmente beschreiben.

### Variante 1: Kapsel-Lumineszenzpigmente mit einem Kern aus Thermoplasten und einer Kondensationspolymer-Hülle

Gemäß der vorliegenden Variante werden die Lumineszenzfarbstoffe in einen thermoplastischen Polymer-Kern, z.B. aus Polymethylmethacrylat (PMMA) oder Polystyrol (PS), eingebettet und mit einer Hülle aus einem quervernetzten polaren Kondensationspolymer, z.B. aus Melamin-Formaldehyd-Harz (MF), umhüllt. Die Hülle aus MF schützt den Farbstoff infolge ihrer Beschaffenheit als quervernetztes unlösliches Polymer insbesondere vor organischen Lösemitteln. Der Kern aus PMMA oder PS schützt den Merkmalsstoff vor wässrigen oder stark polaren Lösemitteln, die durch das MF diffundieren könnten. Weiterhin nehmen PMMA und PS die meisten Merkmalsstoffe sehr gut auf und ermöglichen so deren homogene Verteilung im Kernmaterial. Neben PMMA/PS und MF können auch andere Polymerarten mit ähnlichen Eigenschaften verwendet werden, um analoge Kern-Hülle-Teilchen zu erzeugen.

Es wird ein maßgeschneiderter, mehrstufiger Schutz gegenüber einem breiten Spektrum chemischer Angriffe erzielt.

Gegenstand der vorliegenden Variante 1 ist insbesondere ein spezielles Verfahren zur Herstellung von Kern-Hülle-Teilchen aus einem thermoplastischen unvernetzten Polymer (z.B. PMMA, PS) und einem stark quervernetztem, polaren Kondensationspolymer (MF).

Dabei werden Lösungsmittel-haltige Tropfen gebildet, umhüllt und anschließend das Lösemittel entfernt, um schließlich umhüllte feste Kerne zu erhalten.

Das unvernetzte (Kern-)Polymer wird zusammen mit einem Lumineszenzfarbstoff in einem organischen Lösemittel gelöst und mithilfe eines Emulgators in Form kleiner Tröpfchen dispergiert. Anschließend werden die Tröpfchen durch schwach vernetztes Hüllmaterial umhüllt, das Lösungsmittel aus dem Kern entfernt (wodurch das Kernpolymer zusammen mit dem darin verteilten Lumineszenzfarbstoff im Kern ausfällt) und die Hülle anschließend durch weitere Vernetzung abgeschlossen.

Der erste Prozessschritt basiert auf der Emulgierung von Tröpfchen aus organischen Lösemitteln in Wasser. Dafür sind nur solche Lösungsmittel geeignet, die in Wasser eine separate Phase ausbilden, das heißt nicht oder kaum mit Wasser mischbar sind. Dazu zählen beispielsweise bestimmte Ester wie Ethylacetat, bestimmte aromatische Lösemittel wie Toluol und Benzol, bestimmte Ether wie THF und bestimmte halogenierte Lösungsmittel. Bevorzugt wird als organisches Lösemittel ein chloriertes Lösungsmittel verwendet, wie z.B. Chloroform, Dichlormethan, 1,1,1-Trichlorethan, Trichlorethylen oder Tetrachlorethylen.

Als Kernpolymer geeignet sind sämtliche in den bevorzugten organischen Lösungsmitteln lösliche Polymere, bevorzugt in chlorierten Lösemitteln lösliche Polymere. Um die Löslichkeit zu erhöhen, sind die Polymere des Kernmaterials bevorzugt unverzweigt oder nur schwach verzweigt.

Die Kettenlängen der Polymere des Kernmaterials liegen dabei bevorzugt im Bereich von 1000 bis 1 000 000 g/mol, besonders bevorzugt bei 50 000 bis 250 000 g/mol.

Das Polymer des Kernmaterials besteht aus Thermoplasten, bevorzugt aus einem thermoplastischen, unvernetzten Polymer. Gemäß einer bevorzugten Ausführungsform besteht das Polymer des Kernmaterials aus polymerisierten Ethylenderivaten, insbesondere bevorzugt aus Polystyrol (PS) oder Polyacrylaten, darunter bevorzugt Polymethylmethacrylat (PMMA), Polyvinylacetat (PVAC), Polyvinylchlorid (PVC), Polyacrylnitril (PAN) oder aus einem zwei oder mehrere dieser Polymere enthaltenden Copolymer wie z.B. Acrylnitril-Butadien-Styrol-Copolymer (ABS). Gemäß einer weiteren bevorzugten Ausführungsform handelt es sich bei den Ethylenderivaten um Polyethylen (PE), Polypropylen (PP) oder andere aus aliphatischen Kohlenstoffketten aufgebaute Polymere.

Gemäß einer weiteren bevorzugten Ausführungsform besteht das Polymer des Kernmaterials aus Polycarbonaten (PC), Polyamiden (PA) oder Polyestern wie Polyethylenterephthalat (PET).

Als Tenside bzw. Emulgatoren sind Stoffe geeignet, die das entsprechende organische Lösungsmittel in Wasser dispergieren können, beispielsweise nichtionische Tenside, anionische Tenside, kationische Tenside, amphotere Tenside. Bevorzugt werden anionische Tenside verwendet, oder eine Mischung aus anionischen Tensiden und nichtionischen Tensiden. Bevorzugte anionische Tenside sind Sulfat-basierte Tenside, z.B. Fettalkoholsulfate (Alkylsulfate) oder Fettalkoholethersulfate. Gemäß einer weiteren Ausführungsform sind die bevorzugten anionischen Tenside Carboxylat-basierte Tenside, z.B. Alkylcarboxylate. Gemäß einer weiteren Ausführungsform sind die bevorzugten anionischen Tenside Sulfonatbasierte Tenside, z.B. Alkylsulfonate. Gemäß einer weiteren Ausführungsform sind die bevorzugten anionischen Tenside Phosphatbasierte Tenside, z.B. Alkyletherphosphate.

Anionische Tenside haben den Vorteil, dass durch die negative Ladung der Kopfgruppe die Anlagerung von positiv geladenen Kondensationsprodukten aus der Hüllenbildung gefördert wird.

Bevorzugt werden die Tenside in einer Menge von 0,0001 bis 10 Gew.-% der wässrigen Lösung eingesetzt, weiter bevorzugt 0,1 bis 5 Gew.-%, insbesondere bevorzugt 0,5 bis 2 Gew.-%.

Die das Polymer (und den Lumineszenzfarbstoff) enthaltende organische Phase wird mithilfe des Tensids in der wässrigen Phase dispergiert.

Bevorzugt beträgt der Anteil des gelösten Polymers im organischen Lösungsmittel 1 bis 20%, insbesondere bevorzugt 3 bis 10%.

Bevorzugt beträgt der Anteil der organischen Phase 1 bis 60 Vol.-% des Phasengemischs, insbesondere bevorzugt 10 bis 30 Vol.-%. Bei kleineren Anteilen werden nur geringe Ausbeuten erzielt, bei größeren Anteilen wird die homogene Dispersion der organischen Phase erschwert, was sich jeweils mit Nachteil auf die Wirtschaftlichkeit des Verfahrens auswirkt.

Die Dispersion der organischen Phase in der wässrigen Phase erfolgt bevorzugt mechanisch, z.B. durch Rühren, Ultraschall oder spezielle Geräte zum gezielten Einbringen von Scherkräften. Bevorzugt werden Homogenisiersysteme wie z.B. sogenannte Homogenizer-Aggregate oder Rotor-Stator-Systeme wie z.B. Systeme des Typs Ultra-Turrax der Firma IKA verwendet.

Die Dispersion der organischen Phase in der wässrigen Phase kann einmalig oder kontinuierlich erfolgen. Bei einer einmaligen Dispergierung wird die Dispersion zum Start der Reaktion, z.B. durch kurze Behandlung mit einem Homogenisierungssystem, eingestellt, und wird im weiteren Verlauf z.B. nur noch durch ein zweites, nicht zur Dispersion geeignetes System gerührt bzw. durchmischt. Das Homogenisierungssystem wird also nur kurzzeitig eingesetzt, die Dispersion bleibt jedoch auch ohne weiteren Einsatz stabil. Bei einer kontinuierlichen Dispergierung wird das Homogenisierungssystem über die gesamte Reaktionszeit eingesetzt. Hier wird im Normalfall kein zweites System zum Rühren/Durchmischung der Reaktionslösung benötigt.

Beim Polymer des Hüllmaterials handelt es sich bevorzugt um stark vernetzte Duroplaste. Gemäß einer bevorzugten Ausführungsform besteht das Polymer des Hüllmaterials aus durch Kondensationsreaktionen polymerisierten Einheiten wie z.B. Aminoplasten und Phenoplasten, insbesondere bevorzugt aus Aminoplasten. Bevorzugt handelt es sich dabei um Melamin-Formaldehyd-Harze (MF), Melamin-Phenol-Formaldehyd-Harze (MPF), Phenol-Formaldehyd-Harze (PF), Harnstoff-Formaldehyd-Harze (UF), sowie damit verwandte Harztypen, z.B. Melamin-Guanidin-Formaldehyd-Harze oder Phenol-Resorcin-Formaldehyd-Harze. Gemäß einer weiteren bevorzugten Ausführungsform wird im Harzmaterial das Formaldehyd ganz oder teilweise durch ein anderes Aldehyd ersetzt, z.B. durch Furfural.

Zur Erzeugung der Hülle wird bevorzugt ein wasserlösliches Präpolymerisat eingesetzt. Dabei können sowohl kommerziell erhältliche Präpolymerisate (z.B. Cymel 300 der Firma Allnex) oder aus den jeweiligen Einzelkomponenten, z.B. Melamin und Formaldehyd, durch Erhitzen in wässriger Lösung hergestellte Präpolymerisate eingesetzt werden.

Bevorzugt enthält das Präpolymerisat methylolisierte Amine, insbesondere bevorzugt methylolisiertes Melamin.

Das Präpolymerisat kann vor, während oder nach der Einbringung und Dispergierung der organischen Phase und der wässrigen Phase in die wässrige Phase eingebracht werden. Bevorzugt wird das Präpolymerisat nach Dispergierung der organischen Phase hinzugefügt, da hierdurch oft eine homogenere Tröpfchengröße der dispergierten Phase erreicht wird.

Gemäß einem bevorzugten Anwendungsfall wird die gesamte benötigte Menge an Präpolymerisat auf einmal zugefügt.

Gemäß einem weiteren bevorzugten Anwendungsfall wird die benötigte Menge an Präpolymerisat portionsweise zugegeben, beispielsweise eine Hälfte zum Start der Reaktion und die zweite Hälfte nach Entfernen des organischen Lösemittels.

Gemäß einem weiteren bevorzugten Anwendungsfall wird das Präpolymerisat über die gesamte Reaktionszeit oder über Teile der Reaktionszeit kontinuierlich zugegeben, beispielsweise über eine elektronisch gesteuerte Dosierpumpe.

Die Zugabemengen und Zugabezeitpunkte können die Dichtigkeit der gebildeten Hülle beeinflussen, da z.B. durch eine portionsweise Zugabe Fehlstellen, welche in einem ersten Schritt der Hüllbildung entstanden sind, wieder verschlossen werden können und insgesamt ein kontrollierteres Wachstum der Schicht möglich wird. Insbesondere wird bevorzugt, dass ein Teil des Präpolymerisats erst hinzugefügt wird, nachdem das organische Lösemittel komplett entfernt wurde.

Wird das gesamte Präpolymerisat erst zugegeben, nachdem das organische Lösemittel entfernt wurde, erfolgt keine abdichtende Schichtbildung. Das Vorhandensein des organischen Lösemittels ist ein integraler Bestandteil für die Anlagerung der MF-Hülle, eine Anlagerung an "nacktes" bereits ausgefallenes Kernmaterial erfolgt nicht.

Um die Geschwindigkeit und das Ausmaß der Polymerisierung des Präpolymerisats zu steuern, wird der pH-Wert eingestellt. Die Einstellung kann am Anfang der Reaktion erfolgen und konstant bleiben oder kann stufenweise oder kontinuierlich verändert werden. Gemäß einer bevorzugten Ausführungsform wird der pH-Wert am Reaktionsanfang eingestellt und über die Reaktionszeit konstant belassen. Gemäß einer weiteren bevorzugten Ausführungsform wird der pH-Wert zu bestimmten Zeitpunkten des Reaktionsverlaufs angepasst, beispielsweise wird der pH-Wert am Anfang der Reaktion nicht angepasst, zu einem späteren Zeitpunkt durch Säurezugabe auf einen ersten Wert eingestellt und zu einem noch späteren Zeitpunkt durch weitere Säurezugabe auf einen zweiten Wert eingestellt. Gemäß einer weiteren bevorzugten Ausführungsform wird der pH-Wert kontinuierlich über den gesamten Reaktionsverlauf oder über Teile des Reaktionsverlaufs verändert, beispielsweise durch eine elektronisch gesteuerte Dosierpumpe, die eine Säurelösung in die Reaktionslösung dosiert.

Die Anpassung des pH-Werts erfolgt über Zugabe von Säuren oder Puffersystemen. Bevorzugt werden organische Säuren mit einem pKₛ-Wert in einem Bereich von 3,5 bis 5,5 eingesetzt, beispielsweise Essigsäure, oder Puffersysteme, die auf solchen Säuren und ihren Salzen beruhen, beispielsweise ein Ameisensäure-Formiat-Puffer.

Die Anpassung des pH-Werts erfolgt dabei bevorzugt innerhalb eines Bereichs von pH 7 bis pH 2, insbesondere bevorzugt pH 6 bis pH 3. Unabhängig vom Reaktionsverlauf der Kondensationsreaktion der Hülle kann eine Absenkung des pH-Wertes (auch auf geringere Werte wie z.B. pH 1) am Ende der Reaktion erfolgen, um durch eine Agglomeration der Partikel die Aufarbeitung (Filtrierung) zu erleichtern.

Neben dem pH-Wert ist die Temperatur der Reaktionslösung ein wichtiger Steuerparameter sowohl für die Kondensationsreaktion des Hüllmaterials, als auch für das Entfernen des organischen Lösemittels. Gemäß einer bevorzugten Ausführungsform wird die Temperatur stufenweise erhöht, z.B. von Raumtemperatur nach einer gewissen Reaktionszeit auf 40°C und dann nach einer gewissen weiteren Reaktionszeit von 40°C auf 80°C. Gemäß einer weiteren bevorzugten Ausführungsform wird die Temperatur über die gesamte Reaktionszeit oder über Teile der Reaktionszeit kontinuierlich verändert.

Gemäß einer bevorzugten Ausführungsform wird die Temperatur zum Entfernen des organischen Lösemittels nahe am Siedepunkt des organischen Lösungsmittels gehalten. Bevorzugt ist die Haltetemperatur dabei nicht weniger als 10°C vom Siedepunkt des Lösemittels entfernt, besonders bevorzugt nicht weniger als 5°C. Bevorzugt befindet sich die Haltetemperatur jedoch nicht am oder über dem Siedepunkt des organischen Lösemittels, da hierdurch die Integrität der Hülle vermindert werden kann.

Gemäß einer bevorzugten Ausführungsform wird anstelle oder zusätzlich zur Erhöhung der Temperatur ein Unterdruck angelegt, um das Entfernen des organischen Lösemittels zu erreichen.

Gemäß einer bevorzugten Ausführungsform erfolgt das Entfernen des organischen Lösungsmittels ohne Anlegen von Unterdruck und ohne zusätzliche Temperaturerhöhung durch Rühren bei Raumtemperatur über einen gewissen Zeitraum.

Das Aushärten des Hüllmaterials findet bevorzugt im Temperaturbereich von 50°C bis 100°C statt, insbesondere bevorzugt im Temperaturbereich von 70 bis 80°C.

Bevorzugt findet die Entfernung des Lösemittels über einem Zeitraum von mindestens 20 Minuten statt, wobei der Zeitraum insbesondere bevorzugt mindestens 1h beträgt. Bevorzugt findet das Aushärten des Hüllmaterials bevorzugt über einem Zeitraum von mindestens 30 Minuten statt, wobei der Zeitraum insbesondere bevorzugt mindestens 1h beträgt.

Die Größe der resultierenden Kern-Hülle-Teilchen beträgt dabei bevorzugt 0,1µm bis 20 µm, weiter bevorzugt 0,5µm bis 5 µm, insbesondere bevorzugt 1 µm bis 3µm.

Bevorzugt beträgt der Masseanteil der Hülle mehr als 20% der Masse des Kernmaterials, weiter bevorzugt mehr als 50% der Masse des Kernmaterials, insbesondere bevorzugt mehr als 100% der Masse des Kernmaterials.

Der Anteil des Lumineszenzfarbstoffes am Kernmaterial beträgt bevorzugt zwischen 0,01 bis 30 Gewichtsprozent, weiter bevorzugt zwischen 0,1 bis 20 Gewichtsprozent, insbesondere bevorzugt zwischen 1 und 15 Gewichtsprozent.

### Variante 2: Kapsel-Lumineszenzpigmente mit einem Kern aus Duromeren und einer Kondensationspolymer-Hülle

Diese Variante beinhaltet eine vorteilhafte Weiterentwicklung der aus der Druckschrift US 5795379 A bekannten Methode der Einbringung lumineszierender Farbstoffe in ein festes Harz. Das Verfahren beinhaltet einen weiteren Veredelungsschritt, um die das Lumineszenzpigment enthaltende Druckfarbe (bzw. das Wertdokument) durch Erhöhung der Lösemittelstabilität der Kern-Hülle-Teilchen gegen die sonst typische Migration bzw. das sogenannte "Ausbluten" zu schützen. In diesem Schritt wird um das (z.B. einen oder mehrere Lumineszenzfarbstoffe enthaltende und auf die gewünschte Korngröße vermahlene) Duromer-Harz eine Schutzhülle aus einem Kondensationspolymer aufgebracht.

Bei dem Duromer-Kern handelt es sich dabei bevorzugt um ein Additionspolymer, insbesondere um Polyurethan oder Polyharnstoff.

Während Polyurethane/Polyharnstoffe in einer Reaktionsextrusion ohne spezielle trockene Reaktionsbedingungen (Schutzgas, Vakuum, chemische Zusätze, etc.) immer eine gewisse Porosität aufweisen (siehe die US 3755222), läuft die Kondensation von Melamin-Formaldehydharzen ("MF-Harze") oder anderen Polykondensationspolymeren ohne gasinduzierte Porenbildung ab, da keines der Monomere durch Kontakt mit Wasser Kohlendioxid freisetzt. Andererseits bringt der direkte Einsatz von MF-Harzen als Kernmaterial bzw. als die Farbstoffe tragendes Polymer andere technische Nachteile hinsichtlich Vermahlbarkeit, Aufnahmefähigkeit und Prozessierbarkeit mit sich.

Die vorliegende Variante kombiniert daher die Vorteile der einfachen und gut skalierbaren Produktion von Polyadditionsharz-basierten Sicherheitspigmenten mit den chemikalienbeständigen Eigenschaften von Melamin-Formaldehydharzen, indem auf einen mit Lumineszenzfarbstoffen beladenen Polyadditionsharz-Kern eine Schutzhülle aus Melamin-Formaldehyd-Harz aufkondensiert wird.

Dieser Prozessschritt ermöglicht es, lösliche oder instabile Farbstoffe gegen äußere Einflüsse, wie Säure- oder Basekontakt, Kontakt mit organischen Lösemitteln, extreme klimatische Bedingungen oder Kontakt mit reduzierenden oder oxidierenden Substanzen, zu schützen.

Gemäß einer bevorzugten Ausführung wird in einem ersten Schritt der zu schützende Lumineszenzfarbstoff gemäß der Druckschrift US 5795379 A in eine Duromermatrix eingebracht. Hierfür können die Merkmalsstoffe gemeinsam mit den Rohstoffen des verwendeten Harz-Typs (zum Beispiel einem Polyurethanharz oder Polyharnstoffharz) extrudiert oder verknetet werden. Die bevorzugte Konzentration der Merkmalsstoffe in der Mischung liegt in einem Bereich von 0,1% bis 25%, insbesondere bevorzugt in einem Bereich von 3% bis 20% (Gewichtsprozent). Nach Beendigung des Extrusions- oder Knetprozesses werden die erhaltenen, die Merkmalsstoffe enthaltenden Harze zu Harzpulver vermahlen, wobei die Korngröße gemäß der gewünschten Druckanwendung gewählt wird.

Gemäß einer bevorzugten Ausführung wird für die Erzeugung der mit Lumineszenzfarbstoff versetzten Kern-Polymerpartikel eine Mischung aus einem trimeren Isocyanatmonomer, bevorzugt dem Isocyanurat-Trimer von Isophorondiisocyanat, und verschiedenen Mono-, Di- oder Triaminen in einem Industriekneter auf 150°C bis 250°C, bevorzugt 180°C, erhitzt und dabei bis zum Erhärten geknetet.

Gemäß einer weiteren bevorzugten Ausführungsform wird für die Erzeugung der mit Lumineszenzfarbstoff versetzten Kern-Polymerpartikel eine Mischung aus einem trimeren Isocyanatmonomer, bevorzugt dem Isocyanurat-Trimer von Isophorondiisocyanat, und verschiedenen Mono-, Di- und Triaminen mit einem ansteigenden Temperaturprofil in einem Schnecken-Extruder bei Temperaturen in einem Bereich von 5°C bis 250°C extrudiert. Alternativ können als Kernmaterial beliebige andere dreidimensional vernetzte Isocyanat-basierte Duromere verwendet werden, zum Beispiel Polyurethan-Harze.

Nach Beendigung des Extrusionsprozesses oder Knetprozesses werden die erhaltenen, die Merkmalsstoffe enthaltenden spröden Harzpulver auf die der gewünschten Anwendung entsprechende Korngröße zermahlen.

Aus diesem ersten kostengünstigen und gut skalierbaren Extrusions- bzw. Verknetungsschritt erhält man ein verdruckbares Pulver in der passenden Korngröße. Diese Pigmente besitzen jedoch noch eine poröse bzw. zugängliche Oberfläche, welche den enthaltenen organischen Farbstoff gegenüber äußeren Einflüssen wie Säure- oder Basekontakt, Kontakt mit organischen Lösemitteln, extreme klimatische Bedingungen (wie zum Beispiel warme, feuchte Luft) oder Kontakt mit reduzierenden oder oxidierenden Substanzen angreifbar macht. Die poröse Oberfläche ist das zwangsläufige Resultat aus der Reaktion von Wasser aus der Luft mit den Isocyanatgruppen der Monomere unter den Bedingungen der erwünschten Polyadditionsreaktion (Wärme), bei welcher gasförmiges Kohlendioxid entsteht.

Gegenstand der Variante ist u.a. die Einführung eines Beschichtungsschrittes, welcher diesen Nachteil behebt. In diesem zweiten Schritt werden die im ersten Schritt erhaltenen Additionspolymer-Pigmente mit einer schützenden Polymerschicht umhüllt. Bevorzugt handelt es sich bei der schützenden Polymerschicht um ein Polykondensationspolymer. Weiter bevorzugt enthält das Polykondensationspolymer der Hülle mindestens ein gleiches Monomer wie das Polyadditionspolymer des Kernmaterials, um ein direktes Aufwachsen der Hüllschicht auf das Kernmaterial zu begünstigen. Insbesondere bevorzugt handelt es sich bei diesem Monomer um Melamin. Die hohe Funktionalität (drei vernetzende Gruppen pro Molekül) von Melamin begünstigt ein gutes Aufwachsen und dichtes Abschließen der Hüllschicht.

Gemäß einer bevorzugten Ausführungsform werden die zu beschichtenden Pigmente in einer Konzentration in einem Bereich von 5g/l bis 50 g/l und ein Melamin-Formaldehyd-Präpolymer in einer Konzentration in einem Bereich von 50 g/l bis 250 g/l mit einem Homogenisator bei Temperaturen in einem Bereich von 60°C bis 80°C bei einem pH-Wert in einem Bereich von 3,5 bis 6 für eine Zeitdauer in einem Bereich von einer bis vier Stunden gerührt und dadurch mit einer Schutzhülle ummantelt. Wählt man den pH-Wert zu niedrig, begünstigt man die Bildung von Kondensationskeimen in der Reaktionslösung, welche im Anschluss die Bildung von Kondensationspolymerpartikeln neben den zu beschichtenden Sicherheitspigmenten begünstigen. Wählt man den pH-Wert zu hoch, wird die Kondensationsreaktion unnötig verlangsamt, da die Reaktivität vom Melamin gegenüber Formaldehyd im basischen Medium stark abnimmt (siehe D. Braun, W. Krausse, Angew. Makromol. Chem. 118 (1983) 165).

Für die Prozedur der Beschichtung ist es unerheblich, welcher Lumineszenzfarbstoff in das Polyadditionspolymer des Kernmaterials eingearbeitet wurde, da die bestimmenden Oberflächeneigenschaften (z.B. Ladung, chemische Bindungsstellen etc.) maßgeblich durch die Duromer-Matrix des Kerns bestimmt werden. Somit wird hierin eine universelle Methode zur Verkapselung von Merkmalsstoffen beschrieben.

Gemäß weiteren bevorzugten Ausführungsformen können auch andere Kondensationspolymere zur Beschichtung verwendet werden, wie zum Beispiel Melamin-Phenol-Formaldehyd-Harze, Phenol-Formaldehydharze sowie verwandte Harz-Typen wie Melamin-Guanidin-Formaldehydharze oder Phenol-Resorcin-Formaldehydharze.

### Variante 3: Kapsel-Lumineszenzpigmente mit mehreren Kernen aus Thermoplasten und einer Additionspolymer-Hülle

Die vorliegende Variante 3 beinhaltet eine vorteilhafte Weiterentwicklung der aus der Druckschrift US 5795379 A bekannten Methode der Einbringung lumineszierender Farbstoffe in ein festes Harz. Im vorliegenden Prozess werden die Farbstoffe nicht direkt mit den Komponenten des Harzes extrudiert, sondern in einem vorgelagerten Schritt in Kügelchen (oder Partikeln) aus thermoplastischem Polymer gelöst. Die Konzentration des im Polymer gelösten Farbstoffes liegt dabei vorzugsweise in einem Bereich von 0,01% bis 30 %. Durch diesen vorgelagerten Prozess-Schritt ist es verglichen mit einem direkt in ein Harz extrudierten organischen Farbstoff möglich, die gleiche Helligkeit des Endprodukts mit einer wesentlich geringeren Menge, z.B. 10% bis 60%, an organischem lumineszierenden Stoff zu erreichen. Durch die geringere Farbstoffmenge wird hier eine Kostenersparnis erzielt.

In der vorliegenden Variante handelt es sich ausdrücklich nicht um Kern-Hülle-Teilchen mit definierter einheitlicher Geometrie, insbesondere nicht um Kern-Hülle-Teilchen mit einem Kern und einer Hülle, sondern um Kern-Hülle-Teilchen mit nichteinheitlicher Geometrie mit mehreren Kernen und einer Hülle.

Ein weiterer Vorteil dieser Variante liegt in der Stabilisierung der im thermoplastischen Polymer gelösten organischen Farbstoffe gegenüber wässrigen Säuren und Basen. Eine einheitliche Umhüllung des thermoplastischen Polymers mit dem umhüllenden, kondensierten Harz ist hierfür nicht ausschlaggebend. Das den Farbstoff enthaltende Polymer (zum Beispiel PMMA oder PS) wirkt infolge seiner schlechten Benetzbarkeit mit wässrigen Lösungen als eine Barriere gegenüber wässrigen Säuren und Basen und verhindert so den Kontakt zwischen den gelösten, labilen Farbstoffen und den Säuren und Basen.

Die Einbettung der stabilen Polymerkugeln in ein Harz ermöglicht weiterhin das einfache Einstellen der für den jeweiligen Druckprozess vorteilhaften Pigment-Korngröße mittels Zermahlen, was eine einfache und kostengünstige Skalierbarkeit des Produktionsprozesses zur Folge hat.

Das Herstellungsverfahren ist zweistufig. Im ersten Herstellungsschritt wird der lumineszierende organische Stoff in einem thermoplastischen Polymer gelöst. Hierfür wird das Polymer (zum Beispiel PMMA oder PS) gemeinsam mit dem lumineszierenden Stoff in einem geeigneten organischen Lösemittel (zum Beispiel Dichlormethan) gelöst. Um das Polymer mit dem gelösten Farbstoff wieder in eine feste Form zu überführen, kann man verschiedene Synthesepfade wählen. Bevorzugt wird die Polymer-Lösung mithilfe eines Tensids (zum Beispiel Natrium-Dodecylsulfat) in Wasser dispergiert und das Lösemittel durch einfache Verdunstung aus der Mischung entfernt. Eine weitere Möglichkeit ist das Ausfällen des Polymers (inklusive des gelösten Farbstoffes) in Diethylether mit anschließendem (insbesondere unter Kühlung vorgenommenem) Vermahlen auf die gewünschte Korngröße. Die bevorzugte Korngröße der thermoplastischen Polymerpartikel beträgt weniger als 7 µm, besonders bevorzugt weniger als 3 µm.

Die Thermoplast-Kerne bestehen aus thermoplastischen Polymeren, bevorzugt aus einem thermoplastischen, unvernetzten Polymer. Gemäß einer bevorzugten Ausführungsform besteht das Polymer des Kernmaterials aus polymerisierten Ethylenderivaten, weiter bevorzugt aus Polystyrol (PS) oder Polyacrylaten, darunter bevorzugt aus Polymethylmethacrylat (PMMA), Polyvinylacetat (PVAC), Polyvinylchlorid (PVC) oder Polyacrylnitril (PAN) oder aus einem eines oder mehrere der vorgenannten Polymere enthaltenden Copolymer, z.B. Acrylnitril-Butadien-Styrol-Copolymer (ABS). Gemäß einer weiteren bevorzugten Ausführungsform handelt es sich bei den Ethylenderivaten um Polyethylen (PE), Polypropylen (PP) oder andere, aus aliphatischen Kohlenstoffketten aufgebaute Polymere. Gemäß einer weiteren bevorzugten Ausführungsform besteht das Polymer des Kernmaterials aus Polycarbonaten (PC), Polyamiden (PA) oder Polyestern, z.B. Polyethylenterephthalat (PET).

Die Kettenlängen der Polymere des Kernmaterials liegen dabei bevorzugt in einem Bereich von 1000 bis 1 000 000 g/mol, besonders bevorzugt in einem Bereich von 50 000 bis 250 000 g/mol.

Nach Beendigung des ersten Syntheseschritts werden die gemäß der obigen Beschreibung hergestellten Polymerpartikel im zweiten Herstellungsschritt als lumineszierende Stoffe in eine Duromermatrix eingebracht. Hierfür können die Polymerpartikel gemeinsam mit den Rohstoffen des verwendeten Harz-Typs (zum Beispiel Polyurethanharz) extrudiert oder verknetet werden. Die bevorzugte Konzentration der Polymerpartikel in der Mischung liegt in einem Bereich von 0,1% bis 25%, insbesondere bevorzugt in einem Bereich von 3% bis 20% (d.h. Gewichtsprozent). Nach Beendigung des Extrusions- oder Knetprozesses wird das erhaltene, die Polymerpartikel enthaltende Harz zu einem Harzpulver zermahlen, wobei die Korngröße hinsichtlich des gewünschten Druckprozesses eingestellt werden kann.

Gemäß einer bevorzugten Ausführung werden für das Erzeugen der mit den Thermoplast-Kernen versetzten Duromer-Matrix Additionspolymere verwendet. Dabei wird bevorzugt eine Mischung eines trimeren Isocyanatmonomers, bevorzugt das Isocyanurat-Trimer von Isophorondiisocyanat, und verschiedenen Mono-, Di- oder Triaminen in einem Industriekneter auf 150°C bis 250°C, bevorzugt 180°C, erhitzt und dabei bis zum Erhärten geknetet.

Gemäß einer weiteren bevorzugten Ausführungsform wird für das Erzeugen der mit den Thermoplast-Kernen versetzten Duromer-Matrix eine Mischung eines trimeren Isocyanatmonomers, bevorzugt das Isocyanurat-Trimer von Isophorondiisocyanat, und verschiedenen Mono-, Di- oder Triaminen mit einem ansteigenden Temperaturprofil in einem Schnecken-Extruder bei Temperaturen in einem Bereich von 5°C bis 250°C extrudiert.

Nach Beendigung des Extrusionsprozesses oder Knetprozesses wird das erhaltene, die Merkmalsstoffe enthaltende Harzpulver auf die der jeweiligen Anwendung entsprechende Korngröße zermahlen.

Gemäß einer bevorzugten Ausführungsform werden den thermoplastischen Polymerpartikeln sogenannte Weichmacher zugesetzt, beispielsweise Diethylhexyladipat, Dibutylphthalat oder Diisononylphthalat. Als Stoffklassen können hier Di-ester der Phtalsäure, Di-ester der Adipinsäure und Di-ester der Sebacinsäure mit längerkettigen Monoalkoholen (2-Ethylhexanol, Isononanol, Decylalkohol, Fettalkohole, Benzylalkohol, Glykolether), Tri-ester der Citronensäure, Phosphorsäureester längerkettiger aliphatischer Alkohole, Dibenzoesäureester von aliphatischen Alkoholen, Ester von Fettsäuren mit aliphatischen Alkoholen, Di-ester von Polyethylenglykolethern, Ester von Harzsäuren mit längerkettigen aliphatischen Alkoholen, Weichmacher auf Basis epoxidierter Fettsäureester oder epoxidierter Öle, Kohlenstoffweichmacher und chlorierte Paraffine eingesetzt werden. Hierdurch können die mechanischen Eigenschaften des Polymers angepasst werden. Insbesondere kann die Aufnahmefähigkeit des Kernmaterials für bestimmte Lumineszenzfarbstoffe erhöht werden.

Bevorzugt werden relativ zur Masse des Kernmaterials 0,1 bis 5 Gewichtsprozent Weichmacher zugesetzt, weiter bevorzugt 0,2 bis 2%, insbesondere bevorzugt 0,3 bis 0,6%.

Gemäß einer besonders bevorzugten Ausführung bestehen die Thermoplast-Kerne aus Polymethylmethacrylat (PMMA) oder Polystyrol (PS) und die Duromer-Matrix aus einem isocyanat-basiertem Additionspolymer, wobei es sich bei dem Additionspolymer um Polyurethan oder Polyharnstoff handelt.

Neben den genannten bevorzugten Varianten (Varianten 1 bis 3) sind theoretisch noch weitere Varianten an Kapsel-Lumineszenzpigmenten denkbar, welche sich in Art und Sorte der verwendeten Polymere für Kern und Hülle sowie in der Art der Herstellung unterscheiden.

Unabhängig von der Variante welche für die Herstellung der jeweiligen Kapsel-Lumineszenzpigmente eines Lumineszenzfarbsystems gewählt wurde, wird im Folgenden manchmal von verschiedenen "Kapsel-Lumineszenzpigment-Sorten" gesprochen, wenn sich die jeweiligen Farbstoffe bzw. die Farbstoff-Kombinationen im Kern der Pigmente unterscheiden. Beispiel: Rot lumineszierende Kapsel-Lumineszenzpigmente nach Variante 1 mit einem ersten Farbstoff und grün lumineszierende Kapsel-Lumineszenzpigmente nach Variante 1 mit einem zweiten Farbstoff sind zwei verschiedene Kapsel-Lumineszenzpigment-Sorten, obwohl sie jeweils analog nach Variante 1 hergestellt wurden.

Weiterhin werden die Formulierungen "Farbsystem", "Lumineszenzfarbsystem", und "Pigmentsystem" benutzt. Bei den erfindungsgemäßen Farbsystemen handelt es sich um lumineszierende Systeme auf Basis von speziellen Lumineszenzpigmenten, den Kapsel-Lumineszenzpigmenten. Somit sind erfindungsgemäße Lumineszenzfarbsysteme auch Pigmentsysteme. Beziehungsweise sind erfindungsgemäße Pigmentsysteme mit unterschiedlichen Farbeindrücken der Lumineszenzemission der im System enthaltenen Lumineszenzpigmente daher auch Lumineszenzfarbsysteme.

Wie bereits erwähnt gewinnt man durch Verwendung von Lumineszenzfarbsystemen welche auf Kapsel-Lumineszenzpigmenten basieren eine Reihe an Vorteilen gegenüber den Farbsystemen des Stands der Technik.

Durch ihre gleichartige Größe und Oberflächenbeschaffenheit wird als weiterer Vorteil eine Anpassung der Druckeigenschaften zwischen den einzelnen Kapsel-Lumineszenzpigmenten erreicht. Eine Anpassung der Lichtechtheit der Kapsel-Lumineszenzpigmente kann durch geeignete Wahl der Lumineszenz-Farbstoffe bzw. durch gezielte Mischung von Lumineszenz-Farbstoffen unterschiedlicher Stabilität erreicht werden, welche im Kern der Kern-Hülle-Teilchen verteilt sind.

Die Kapsel-Lumineszenzpigmente des Lumineszenzfarbsystems weisen weiterhin zahlreiche Applikationsvorteile auf. Z.B. besitzen alle unterschiedlichen, daraus hergestellten Farben die gleichen Druckeigenschaften, d.h. es erfolgt z.B. keine Entmischung der unterschiedlichen Kapsel-Lumineszenzpigmente im Drucklack, kein unterschiedliches Verhalten der Lumineszenzfarben bzw. der Kapsel-Lumineszenzpigmente auf der Druckmaschine und es wird nur ein einziges Farb-Formulierungssystem für alle erstellbaren Lumineszenzfarbtöne benötigt.

Die erfindungsgemäßen Kapsel-Lumineszenzpigmente erzeugen farbige (VIS-)Emissionen bei UV-Bestrahlung, besitzen jedoch bevorzugt keine (absorptionsbasierte) Eigenfarbe bzw. nur eine schwache Eigenfarbe, sodass ein Aufdruck unter Normalbedingungen bei Raumlicht auf dem Wertdokument nicht erkennbar ist.

Um die Nachteile des Stands der Technik zu beheben, wurde ein Lumineszenzfarbsystem entwickelt, welches aus mindestens zwei, bevorzugt mindestens drei Kapsel-Lumineszenzpigmenten besteht, die
- die gleiche Größe,
- gleiche Oberflächenchemie und ein
- ähnliches spezifisches Gewicht besitzen; (Hierdurch wird das Applikationsproblem gelöst, d.h. die Durchgängigkeit in der Herstellung und im Druck der Farben. Dabei können auch relative Abweichungen im Bereich <20% in Einzelfällen durch Art und Beladungshöhe der unterschiedlichen Farbstoffe auftreten, die jedoch die Farbeinbringung im Normalfall nicht beeinträchtigen.);
- eine gleichartige chemische Stabilität besitzen (hierdurch wird das Problem des unterschiedlichen Verhaltens der Lumineszenzstoffe des Stands der Technik bei Lösungsmittelkontakt gelöst);
- eine gleichartige Lichtechtheit besitzen (hierdurch wird das Problem des unterschiedlichen Verhaltens der Lumineszenzstoffe des Stands der Technik bei Sonnenlicht und UV-Bestrahlung gelöst);
- miteinander frei mischbar sind (hierdurch können beliebige Mischfarben des Lumineszenzfarbsystems gebildet werden).

Die erfindungsgemäße technische Lösung basiert insbesondere darauf, dass
- die Lumineszenzfarbstoffe in eine Polymermatrix (Kern) eingebettet werden, wodurch sich einerseits ihre relative Lumineszenz erhöht (geringeres Konzentrations-Quenching gegenüber konzentriertem Farbstoff) und andererseits ein erster Schutz gegen chemische Angriffe erfolgt;
   - der Kern mit einer zusätzlichen Hülle aus einem zweiten, unterschiedlichen Polymer versehen wird, wodurch einerseits bevorzugt ein komplementärer Schutz gegen chemische Angriffe erfolgt (die Hülle ist stabil gegenüber Stoffen, die den Kern angreifen könnten, der Kern ist stabil gegenüber Stoffen, die die Hülle angreifen könnten) und andererseits die Kompatibilität bzw. die freie Mischbarkeit aller Pigmente sichergestellt wird (gleiche Oberfläche);
   - bevorzugt alle Pigmente die gleiche (bzw. ähnliche) Korngröße (bzw. Korngrößenverteilung) besitzen.

Das erfindungsgemäße Lumineszenzfarbsystem basiert bevorzugt auf einem RGB-System, weil auf diese Weise ein größerer Farbraum abgedeckt werden kann und insbesondere durch additive Farbmischung ein weißer Farbeindruck erzeugt werden kann. Ein RGB-System eignet sich daher besonders für Echtfarbendarstellungen oder andere, komplexere Druckbilder.

Die Kapsel-Lumineszenzpigmente werden bevorzugt verdruckt, allerdings können sie in alternativen Ausführungen auch in ein gemeinsames Trägermaterial eingebracht werden bzw. das Trägermaterial damit durchgefärbt werden um Sicherheitselemente wie z.B. einen Sicherheitsfaden, Sicherheitsfolien oder eine Melierfaser zu bilden.

Gemäß einer bevorzugten Ausführungsform existieren daher mindestens drei unterschiedliche Kapsel-Lumineszenzpigmente, deren Emission jeweils den Grundfarben Rot, Grün und Blau entsprechen. In bestimmten Fällen kann es vorteilhaft sein, zusätzlich zu diesen drei Pigmenten oder anstelle des rot lumineszierenden Pigments ein gelb lumineszierendes Pigment zu verwenden, wodurch ein alternatives Dreifarbsystem (Gelb, Grün, Blau) bzw. ein erweitertes Vierfarbsystem (Rot, Gelb, Grün, Blau) entsteht. Die Ursache hierfür ist die hohe technische Schwierigkeit, lichtstabile rote Emissionsfarben ohne starke Eigenfärbung herzustellen. Der Ersatz der rot lumineszierenden Pigmente z.B. in gelb lumineszierenden Mischfarben kann daher vorteilhaft sein. Ebenso kann je nach den benötigten Lichtstabilitäten und dem Druckbild auch der Ersatz einer anderen Farbe vorteilhaft sein.

Gemäß einer weiteren bevorzugten Ausführungsform werden daher drei unterschiedlich lumineszierende Kapsel-Lumineszenzpigmente oder mindestens vier unterschiedlich lumineszierende Kapsel-Lumineszenzpigmente eingesetzt, welche nicht notwendigerweise den Grundfarben Rot, Grün und Blau entsprechen.

In bestimmten Fällen ist jedoch ein reduziertes Lumineszenzfarbsystem wünschenswert, beispielsweise wenn auf einem Wertdokument nur rot und grün lumineszierende Bereiche vorkommen bzw. davon abgeleitete Mischfarben wie z.B. Gelbtöne. In diesem Fall ist ein Zweifarbensystem aus Rot und Grün ausreichend und technisch weniger aufwändig bzw. leichter applizierbar.

Gemäß einer weiteren bevorzugten Ausführungsform werden daher zwei unterschiedlich lumineszierende Kapsel-Lumineszenzpigmente eingesetzt. Insbesondere werden dabei die Kombinationen der Kapsel-Lumineszenzpigmente mit den Emissionsfarben Rot mit Grün, Rot mit Blau, Grün mit Blau, Gelb mit Blau, Gelb mit Grün, und Gelb mit Rot bevorzugt.

Gemäß einer bevorzugten Ausführungsform bilden die Kapsel-Lumineszenzpigmente an mindestens einer Stelle des Wertdokuments in ihrer Mischung einen weißen Farbeindruck der Emission. Beispielsweise durch die Kombination aus rot, grün und blau lumineszierenden Kapsel-Lumineszenzpigmenten.

Bilden mehrere Lumineszenzpigmente eine Mischung, oder sind mehrere Lumineszenzpigmente an unterschiedlichen Stellen des gleichen Wertdokumentes aufgedruckt, müssen sie ein vergleichbares Stabilitätsverhalten zeigen, um zu verhindern, dass sich der Farbton verändert bzw. das Druckbild uneinheitlich wird. Beispielsweise würde sich bei einer aufgedruckten weiß-roten Flagge durch Herauslösen des rot lumineszierenden Farbstoffes der weiß lumineszierende Teil der Flagge Türkis verfärben und der rot lumineszierende Teil verblassen bzw. verschwinden.

Um eine Veränderung des Lumineszenzfarbeindrucks durch die Migration eines Farbstoffs, durch die Zerstörung eines Farbstoffs durch Säuren oder Basen oder durch das Herauslösen eines Farbstoffs durch organische Lösungsmittel zu verhindern, müssen die verwendeten Lumineszenzpigmente eine außerordentlich hohe Chemikalienstabilität aufweisen. Erfindungsgemäß werden dafür bevorzugt spezielle Kern-Hülle-Teilchen (Kapsel-Lumineszenzpigmente) verwendet.

Bevorzugt unterscheiden sich die Kern-Hülle-Teilchen der unterschiedlichen Kapsel-Lumineszenzpigmente nur bezüglich Beladungsmenge und Art des Farbstoffs im Kern und sind ansonsten bezüglich Hüllmaterial und Kernmaterial weitestgehend identisch. Dadurch wird die gemeinsame Verdruckbarkeit der Kapsel-Lumineszenzpigmente erleichtert und es ergeben sich technische Vorteile für das Lumineszenzfarbsystem, z.B. muss nur eine Lackformulierung für mehrere unterschiedliche Druckfarben auf Lager gehalten werden. Weitere Applikationsvorteile sind z.B. die höhere Lagerstabilität der Druckfarbe, da keine Entmischung aufgrund unterschiedlicher physikalischer Eigenschaften der Lumineszenzpigmente auftritt, sowie ein identisches Verhalten der unterschiedlichen Lumineszenzpigmente in der Druckmaschine bzw. bei dem Verdrucken.

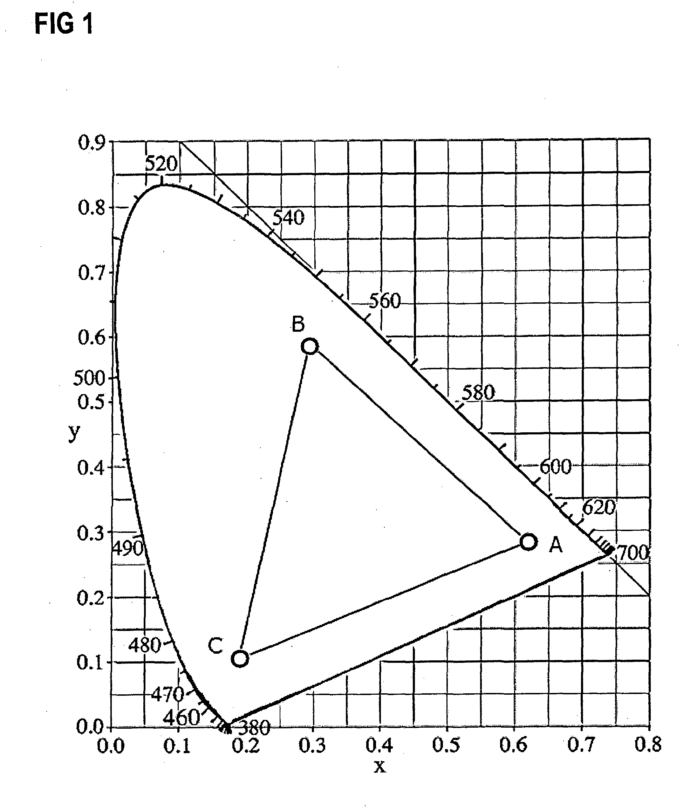

Im Gegensatz dazu müssen bei klassischen Lumineszenzpigmenten die Formulierungen der Druckfarben jeweils an die darin enthaltenen Lumineszenzpigmente angepasst werden, es sind also die Bereitstellung und Lagerung einer Vielzahl an unterschiedlichen Formulierungen und Formulierungskomponenten notwendig. Ebenso ist die Kombination von Lumineszenzpigmenten mit inkompatiblen Eigenschaften bei klassischen Lumineszenzpigmenten des Standes der Technik oft problematisch. Aufgrund der Gleichartigkeit der erfindungsgemäßen Kapsel-Lumineszenzpigmente können diese vor dem Einbringen in eine Farbe als Pulver beliebig miteinander gemischt werden, um einen bestimmten Lumineszenz-Farbton einzustellen, oder es können unterschiedliche, bereits hergestellte Farben beliebig miteinander gemischt werden, um einen bestimmten Lumineszenz-Farbton einzustellen (siehe Figur 1).

Figur 1 zeigt die Darstellung eines RGB-Farbsystems anhand der CIE-Normtafel. Innerhalb des Dreiecks (A: Rote Farbe; B: Grüne Farbe: C: Blaue Farbe) kann jede beliebige Lumineszenzfarbe aus den Kapsel-Lumineszenzpigmenten mit den Lumineszenz-Normfarbwerten der Eckpunkte gemischt werden.

Weiterhin wird mit dem Kern-Hülle-Aufbau erreicht, dass die Chemikalienstabilität der Kapsel-Lumineszenzpigmente unabhängig von der Chemikalienstabilität der gewählten Lumineszenzfarbstoffe ist. Führt man einen qualitativen Stabilitätstest von Druckmustern aus, wird oft eine Einteilung in die folgenden Stufen durchgeführt:
4: keine sichtbare Änderung
3: geringfügige Änderung
2: deutliche Änderung, weniger als 50% beschädigt
1: starke Änderung, mehr als 50% beschädigt
0: Element zerstört

Qualitativ erfolgt die Bewertung der Stabilität anhand der oben genannten Stufen 0-4 durch Betrachtung des angeregten Andrucks mit dem Auge.

Quantitativ erfolgt die Bewertung durch Vermessung des Emissionsspektrums mit Hilfe eines Fluoreszenzspektrometers.

Erfahrungsgemäß besitzen Andrucke mit der Stufe 4 ("keine sichtbare Änderung") eine nach dem Test verbleibende Lumineszenzintensität von über 80% bezogen auf die ursprüngliche Lumineszenzintensität. Dies wird im Folgenden als eine Stabilität von über 80% bezeichnet.

Um die Stabilität der Kapsel-Lumineszenzpigmente qualitativ und quantitativ beurteilen zu können, wird im Folgenden ein applikationsnahes Testverfahren beschrieben.

Testverfahren A5 bzw. A30:
- Einbringen der Kapsel-Lumineszenzpigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Eintauchen des Andrucks (bzw. eines abgeschnittenen Teils des Andrucks) in die jeweilige Testsubstanz, gegen welche die Stabilität des Andrucks ermittelt werden soll für einen Zeitraum von 5 Minuten (A5) bzw. 30 Minuten (A30)
- Entfernen des Andrucks aus der Testsubstanz und Abwaschen von anhaftender Testsubstanz mit Wasser
- Trocknen des Andrucks bei 60°C für 2h
- Die quantitative Stabilität des Andrucks gegen die Testsubstanz ergibt sich aus dem Vergleich der Intensität der Lumineszenzemission des Andrucks vor und nach Behandlung mit der Testsubstanz (bzw. dem Vergleich eines unbehandelten Teils des Andrucks mit einem behandelten Teil des gleichen Andrucks); Stabilität = (Intensität nach Behandlung mit Lösemittel) / (Intensität vor Behandlung mit Lösemittel)

Die Lumineszenzfarbstoffe enthaltenden Kapsel-Lumineszenzpigmente der vorliegenden Erfindung erreichen in Andrucken dabei für applikationsrelevante Lösemittel, Säuren und Basen die höchste Stufe 4 oder eine Stabilität >80%, selbst wenn Andrucke des gleichen ungeschützten Lumineszenzfarbstoffs nur die unterste Stufe 0 erreichen.

Gemäß einer bevorzugten Ausführungsform liegt die höchste Stabilitätsstufe "keine sichtbare Änderung" oder eine Stabilität >80%, bevorzugt >90% bei den folgenden applikationsrelevanten Lösungsmitteltests gemäß Testverfahren A5, besonders bevorzugt gemäß Testverfahren A30 vor:
Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor). Dabei beträgt die Einwirkungsdauer 5 bzw. bevorzugt 30 Minuten, um sicherzustellen, dass ein ausreichender langer Kontakt zwischen Lumineszenzpigment und Testsubstanz zu Stande kommt.

Gemäß einer weiteren bevorzugten Ausführungsform werden die genannten Stabilitäten von allen Kapsel-Lumineszenzpigmenten des Lumineszenzfarbsystems für folgende applikationsrelevante Lösungsmittel erfüllt:
- Ethanol
- Trichlorethylen
- Tetrachlorethylen
- Xylol
- Leichtbenzin
- Natriumsulfit-Lösung (10 Gewichtsprozent)
- Schwefelsäure (2 Gewichtsprozent)
- Ammoniaklösung (10 Gewichtsprozent)

Generell ist zu beachten, dass der für den Test verwendete Drucklack bzw. das Substrat auf dem aufgedruckt wird selbst im Test stabil sein muss, dies ist für die im Sicherheitsdruck von Wertdokumenten verwendeten Lacke und Substrate generell erfüllt. Die Stabilität des Drucklacks/Substrats lässt sich beispielsweise mit inerten Lumineszenzstoffen (z.B. anorganischen Phosphoren) prüfen.

Gemäß einer bevorzugten Ausführungsform sind die Pigmente des Lumineszenzfarbsystems selbst gegen besonders aggressive chemische Lösungsmittel für mindestens 5 Minuten stabil, z.B. Aceton. Insbesondere ist Aceton in der Lage, die meisten Lumineszenzfarbaufdrucke des Stands der Technik anzugreifen.

Bevorzugt zeigen die unterschiedlichen Kapsel-Lumineszenzpigmente bei maschineller quantitativer Bestimmung der Lumineszenzstärken vor und nach einer Exposition mit Chemikalien einen Intensitätsabfall der Lumineszenzintensität von weniger als 20%, bevorzugt weniger als 10%, insbesondere bevorzugt weniger als 5%.

Insbesondere beträgt der Unterschied zwischen den auf den Startwert normierten Lumineszenzintensitäten der Kapsel-Lumineszenzpigmente mit unterschiedlichen Lumineszenzemissionen (Kapsel-Lumineszenzpigment-Sorten) untereinander weniger als 20 Prozentpunkte, bevorzugt weniger als 10 Prozentpunkte, insbesondere bevorzugt weniger als 5 Prozentpunkte. Das heißt, dass sich die unterschiedlichen Pigmente selbst beim Auftreten eines geringen Intensitätsverlustes durch Chemikalienexposition gleich verhalten und daher keine erkennbare Änderung der relativen Farbverhältnisse auftritt. Beispielsweise kann nach Chemikalienbehandlung eine erste Kapsel-Lumineszenzpigment-Sorte des Lumineszenzfarbsystems (z.B. rot) noch 96% seiner anfänglichen Intensität besitzen und eine zweite Kapsel-Lumineszenzpigment-Sorte des Lumineszenzfarbsystems (z.B. grün) noch 95% seiner anfänglichen Intensität besitzen. Sie unterscheiden sich also nur um einen Prozentpunkt untereinander.

Dabei haben zwei Kapsel-Lumineszenzpigment-Sorten im Rahmen des Testverfahrens A5 bzw. A30 eine im Wesentlichen gleiche chemische Stabilität, wenn Teststreifen mit Andrucken von beiden Kapsel-Lumineszenzpigment-Sorten alle gewählten Testlösungen (bevorzugt: Ethylacetat, Toluol, HCl 5%, NaOH 2%, Natriumhypochlorit 5% aktives Chlor) mit jeweils >80% verbleibender Lumineszenzintensität, bezogen auf die jeweilige Anfangsintensität, bestehen. Dabei wird für jede Testlösung ein neuer Teststreifen verwendet.

Gemäß einer bevorzugten Ausführungsform beträgt der im Rahmen der Stabilitätstests durch Behandlung mit Chemikalien verursachte Farbunterschied des Farbeindrucks der Lumineszenzemission relativ zum Farbeindruck der Lumineszenzemission vor Chemikalienbehandlung für Pigmentmischungen des Lumineszenzfarbsystems ΔD < 0,01, weiter bevorzugt ΔD < 0,005, insbesondere bevorzugt ΔD < 0,001.

Dabei bezeichnet ΔD den euklidischen Abstand der x,y-Koordinaten der Normfarbwerte der Lumineszenzemission auf der CIE-Normfarbtafel: ΔD = [(x₁-x₂)²+(y₁-y₂)²]^{0,5}.

Durch diese Gleichartigkeit der chemischen Stabilität der unterschiedlichen Lumineszenzpigmente wird erreicht, dass keine sichtbare Verschiebung der Farbtöne, z.B. durch Herauslösen einer einzelnen Lumineszenzfarbkomponente aus einem Gemisch, auftreten kann.

Um eine Veränderung des Lumineszenzfarbtons durch unterschiedliche Lichtechtheiten der Kapsel-Lumineszenzpigmente zu vermeiden, müssen die unterschiedlichen Kapsel-Lumineszenzpigmente über genügend hohe und genügend ähnliche Lichtechtheiten verfügen.

Die Lichtechtheit wird dabei über die zur Lichtechtheitsbestimmung von Absorptionsfarben übliche Europäische Blau-Wollskala bestimmt, z.B. analog zur Norm EN ISO 105-B01:1999, wobei jedoch statt des (absorptiven) Farbeindrucks die Intensität der Lumineszenzemission an den verschiedenen Punkten der Wollskala bestimmt wird. Ein Punkt der Wollskala gilt dabei als erreicht, wenn nach Behandlung noch mehr als 50% der ursprünglichen Lumineszenzintensität gemessen werden können.

Um die Lichtechtheit der Kapsel-Lumineszenzpigmente quantitativ beurteilen zu können, wird im Folgenden ein applikationsnahes Testverfahren beschrieben.

### Testverfahren B:

- Einbringen der Kapsel-Lumineszenzpigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Einsetzen des Andrucks in eine Xenon-Lichttestkammer (oder äquivalentes Lichtechtheits-Bestimmungsgerät) und Bestrahlung gemäß der Europäischen Blau-Wollskala für die gewünschte Wollskala-Stufe
- Die quantitative Lichtechtheit des Andrucks ergibt sich aus dem Vergleich der Intensität der Lumineszenzemission des Andrucks vor und nach Behandlung (bzw. dem Vergleich eines unbehandelten Teils des Andrucks mit einem behandelten Teil des gleichen Andrucks); Normierte Intensität bei Wollskala-Stufe = (Intensität bei Wollskala-Stufe) / (Intensität vor Behandlung)

Bevorzugt erreichen alle Kapsel-Lumineszenzpigmente des Lumineszenzfarbsystems mindestens Wollskala 3, das heißt, sie besitzen bei Wollskala 3 noch eine normierte Intensität von über 50%.

Bevorzugt haben die unterschiedlichen Kapsel-Lumineszenzpigment-Sorten die im Wesentlichen gleiche Lichtechtheit, d.h. die auf den Anfangswert normierten Intensitäten der unterschiedlichen Kapsel-Lumineszenzpigmentsorten des Lumineszenzfarbsystems unterscheiden sich bei Wollskala 3 gemäß Testverfahren B untereinander um weniger als 30 Prozentpunkte, weiter bevorzugt weniger als 20 Prozentpunkte, insbesondere bevorzugt weniger als 10 Prozentpunkte. Hiermit wird sichergestellt, dass der korrekte Farbeindruck von Mischfarben z.B. auch nach längerer Sonneneinstrahlung oder nach starker maschineller UV-Bestrahlung noch vorhanden ist.

Beispielsweise kann bei Wollskala 3 eine erste Kapsel-Lumineszenzpigment-Sorte des Lumineszenzfarbsystems noch 61% seiner anfänglichen Intensität besitzen und eine zweite Kapsel-Lumineszenzpigment-Sorte des Lumineszenzfarbsystems noch 65% seiner anfänglichen Intensität besitzen. Sie unterscheiden sich also um 4 Prozentpunkte untereinander.

In bestimmten Fällen zeigen verschiedene Lumineszenzfarbstoffe jedoch einen unterschiedlichen Verlauf in ihrer Lichtstabilität. Beispielsweise kann ein Farbstoff nach kurzer Bestrahlung (Wollskala 1) einen deutlichen Intensitätsabfall zeigen und sich dann stabilisieren, während ein anderer Farbstoff einen kontinuierlichen Intensitätsabfall aufweist, sodass beide Farbstoffe am Ende wieder die gleiche relative Intensität besitzen, sich zwischenzeitlich jedoch unterscheiden. In diesem Fall würde man bei kurzer Bestrahlungsdauer eine Verschiebung des Lumineszenzfarbtons wahrnehmen, welche bei längerer Bestrahlung wieder verschwindet.

Um diesen Effekt zu vermeiden, unterscheiden sich bevorzugt die auf den Anfangswert normierten Intensitäten der unterschiedlichen Kapsel-Lumineszenzpigmente gemäß Testverfahren B bei Wollskala 1 um weniger als 30 Prozentpunkte, weiter bevorzugt weniger als 20 Prozentpunkte, insbesondere bevorzugt weniger als 10 Prozentpunkte. Weiterhin unterscheiden sich bevorzugt die auf den Anfangswert normierten Intensitäten der unterschiedlichen Kapsel-Lumineszenzpigmente gemäß Testverfahren B bei Wollskala 2 um weniger als 30 Prozentpunkte, weiter bevorzugt weniger als 20 Prozentpunkte, insbesondere bevorzugt weniger als 10 Prozentpunkte.

Gemäß einer bevorzugten Ausführungsform beträgt der Farbunterschied des Farbeindrucks der Lumineszenzemission bei Wollskala 3 relativ zum Farbeindruck der Lumineszenzemission vor dem Wollskala-Test gemäß Testverfahren B für Kapsel-Lumineszenzpigmentmischungen des Lumineszenzfarbsystems ΔD < 0,03, bevorzugt ΔD < 0,02, besonders bevorzugt ΔD < 0,01.

Gemäß einer weiteren bevorzugten Ausführungsform beträgt gemäß Testverfahren B für Kapsel-Lumineszenzpigmentmischungen des Lumineszenzfarbsystems bei Wollskala 2 der Farbunterschied ΔD < 0,03, bevorzugt ΔD < 0,02, besonders bevorzugt ΔD < 0,01. Gemäß einer weiteren bevorzugten Ausführungsform beträgt gemäß Testverfahren B für Kapsel-Lumineszenzpigmentmischungen des Lumineszenzfarbsystems bei Wollskala 1 der Farbunterschied ΔD < 0,03, bevorzugt ΔD < 0,02, besonders bevorzugt ΔD < 0,01.

Dabei bezeichnet ΔD den euklidischen Abstand der x,y-Koordinaten der Normfarbwerte der Lumineszenzemission auf der CIE-Normfarbtafel: ΔD = [(x₁-x₂)²+(y₁-y₂)²]^{0,5}.

Durch diese Gleichartigkeit der Lichtechtheit der unterschiedlichen Lumineszenzpigmente wird erreicht, dass keine sichtbare Verschiebung der Farbtöne, z.B. durch Bleichen einer einzelnen Lumineszenzfarbkomponente aus einem Gemisch, auftreten kann.

Gemäß einer bevorzugten Ausführungsform wird in mindestens einem Kapsel-Lumineszenzpigment zum Angleich des Verlaufs der Lichtstabilität eine Mischung aus mehreren Lumineszenzfarbstoffen mit unterschiedlichen Verläufen der Lichtstabilität eingesetzt. Beispielsweise verhält sich eine Mischung aus einem kontinuierlich stabilen Farbstoff und einem kleinen Anteil eines instabilen Farbstoffs, welcher bereits bei Wollskala 1 ausbleicht, identisch mit einem einzelnen Farbstoff, welcher einen geringen Abfall der Lumineszenzintensität bei kurzer Bestrahlungsdauer aufweist und dann stabil bleibt.

Gemäß einer weiteren bevorzugten Ausführungsform wird ein Gemisch aus zwei Kapsel-Lumineszenzpigment-Sorten mit im Wesentlichen gleichem Farbeindruck, jedoch unterschiedlichen Lichtechtheiten eingesetzt, um in Summe die im Wesentlichen gleiche Lichtechtheit wie eine dritte Kapsel-Lumineszenzpigment-Sorte mit unterschiedlichem Farbeindruck der Lumineszenzemission zu erreichen.

Damit werden für die verschiedenen Kapsel-Lumineszenzpigmente zu zwei verschiedenen Wollskala-Stufen identische normierte Lumineszenzintensitäten erreicht und für die anderen Zeiten näherungsweise angeglichen. Der Betrachter sieht somit keine signifikanten Unterschiede in den Lumineszenzintensitäten und Farbtönen der unterschiedlichen Kapsel-Lumineszenzpigmente bzw. deren Mischungen.

Weiterhin ist es möglich, die Lichtstabilität eines ersten Lumineszenzfarbstoffs durch Zugabe eines zweiten Lumineszenzfarbstoffs zu beeinflussen, selbst wenn die Anregungsstrahlung nur in der Lage ist, den ersten Farbstoff anzuregen. Dazu muss der zweite Farbstoff in der Lage sein, durch Energietransfer die Anregungsenergie des ersten Farbstoffes zu übernehmen, wodurch die Lichtechtheit des ersten Farbstoffes deutlich zunimmt.

Gemäß einer bevorzugten Ausführungsform wird in mindestens einem Kapsel-Lumineszenzpigment ein Energietransfersystem zwischen zwei Farbstoffen benutzt. Bevorzugt handelt es sich bei einem der beiden Farbstoffe um einen im UV-Bereich anregbaren Farbstoff, der im sichtbaren Bereich emittiert, und beim anderen der beiden Farbstoffe um einen im sichtbaren Bereich anregbaren Farbstoff, welcher im sichtbaren Bereich emittiert.

Gemäß einer bevorzugten Ausführungsform handelt es sich bei dem Lumineszenzfarbstoff um einen Fluoreszenzfarbstoff. Gemäß einer weiteren bevorzugten Ausführungsform handelt es sich bei dem Lumineszenzfarbstoff um einen Phosphoreszenzfarbstoff. Gemäß einer weiter bevorzugten Ausführungsform handelt es sich bei dem Lumineszenzfarbstoff um einen im UV-Bereich anregbaren Farbstoff, welcher im sichtbaren Spektralbereich emittiert. Gemäß einer weiteren bevorzugten Ausführungsform handelt es sich um einen im sichtbaren Spektralbereich anregbaren Farbstoff, welcher im sichtbaren Spektralbereich emittiert. Bei den Lumineszenzfarbstoffen kann es sich sowohl um rein organische Moleküle handeln, als auch um metallorganische Komplexe. Explizit ausgenommen sind rein anorganische Lumineszenzstoffe. Diese verfügen zwar oft über exzellente Lichtstabilitäten und chemische Stabilitäten, erreichen jedoch nicht die Lumineszenzintensität von organischen Lumineszenzfarbstoffen.

Gemäß einer bevorzugten Ausführungsform werden zwei oder mehr Lumineszenzfarbstoffe gemischt, um ein Energietransfersystem bzw. FRET-System zu erstellen, in welchem der erste Farbstoff nach Anregung seine Anregungsenergie partiell oder vollständig an den zweiten Farbstoff abgeben kann. Im Falle eines derartigen FRET-Systems ist einer der beteiligten Farbstoffe bevorzugt im UV-Bereich anregbar und emittiert im sichtbaren Spektralbereich, während der andere Farbstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzfarbstoffen, welche im sichtbaren Spektralbereich emittieren, sind rein organische Lumineszenzfarbstoffe und lumineszierende Metallkomplexe. Mögliche Farbstoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzfarbstoffklassen sind ebenfalls einsetzbar.

Insbesondere werden als Farbstoffklasse für im sichtbaren Spektralbereich anregbare Farbstoffe welche im Sichtbaren emittieren aufgrund ihrer hohen Lichtstabilität bevorzugt Perylenfarbstoffe eingesetzt.

Beispiele für FRET-Systeme sind z.B. Mischungen aus einem grün-gelb anregbaren Fluoreszenzfarbstoff und einem grün-gelb emittierenden Fluoreszenzfarbstoff, beispielsweise eine Mischung mit einem Gewichtsverhältnis von 1:15 aus 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄, ein grün anregbarer Perylenfarbstoff welcher eine orange Lumineszenzemission besitzt, im weiteren "F-Orange" genannt) und N-(2-(4-oxo-4H-benzo [d] [1,3] oxazin-2-yl)phenyl)naphthalen-2-sulfonamid (C₂₄H₁₆N₂O₄S, ein UV-anregbarer Farbstoff welcher eine grüne Lumineszenzemission besitzt, im weiteren "F-Grün" genannt).

Ein FRET-System kann auch dazu dienen, eine forensische Komponente in einem Lumineszenzpigment auszulesen. So kann der Akzeptor-Farbstoff nicht nur durch einen Energietransfer des Donorfarbstoffes angeregt werden, sondern auch eine direkte Anregung des Akzeptorfarbstoffes kann zu dessen Lumineszenz führen. Beispielsweise kann eine Mischung aus F-Orange und F-Grün einerseits im UV-A-Bereich, z.B. bei 365 nm, angeregt werden (Anregung des F-Grün gefolgt von Energieübertrag auf F-Orange). Andererseits kann für einen forensischen Test auch das F-Orange direkt angeregt werden, beispielsweise durch Licht der Wellenlänge 525 nm. Die direkte Anregung des Akzeptorstoffes kann somit verwendet werden, um FRET-Systeme von anderen Farbstoffsystemen zu unterscheiden, und bietet eine zusätzliche Sicherheitsstufe, die z.B. in einem Labor oder automatisch von Sensoren ausgewertet werden kann.

Gemäß einer bevorzugten Ausführungsform enthält das Kapsel-Lumineszenzpigment daher ein Energietransfersystem (FRET-System), bevorzugt ein FRET-System aus einem UV-anregbaren Farbstoff als Donor und einem im sichtbaren Bereich anregbaren Farbstoff als Akzeptor. Bevorzugt handelt es sich bei dem Akzeptor um einen Perylenfarbstoff. Bevorzugt wird der Akzeptor als forensischer Marker verwendet.

Gemäß einer bevorzugten Ausführungsform sind die Kapsel-Lumineszenzpigmente des Lumineszenzfarbstoffsystems mit UV-A-Strahlung (d.h. im Wellenlängenbereich von 315 nm bis 380 nm), insbesondere bei 365 nm, anregbar. Gemäß einer weiteren bevorzugten Ausführungsform sind die Kapsel-Lumineszenzpigmente des Lumineszenzfarbstoffsystems mit UV-B-Strahlung (d.h. im Wellenlängenbereich von 280 nm bis 315 nm), insbesondere bei 311 nm, anregbar. Gemäß einer weiteren bevorzugten Ausführungsform sind die Kapsel-Lumineszenzpigmente des Lumineszenzfarbstoffsystems mit UV-C-Strahlung (d.h. im Wellenlängenbereich von 100 nm bis 280 nm), insbesondere bei 254 nm, anregbar. Gemäß einer weiteren bevorzugten Ausführungsform werden zwei Farbstoffsysteme erzeugt, welche sich separat im UV-A (bevorzugt 365 nm) und UV-C (bevorzugt 254 nm) anregen lassen und dabei unterschiedliche Farben zeigen. Beispielsweise erscheinen drei bedruckte Stellen eines Wertdokuments unter UV-A jeweils rot, grün und blau, dieselben Stellen erscheinen unter UV-C-Bestrahlung jedoch mit anderen Farben, z.B. gelb, blau, violett. Dies ist mit zwei verschiedenen Methoden realisierbar. Zum einen kann in einer Druckfarbe eine Mischung aus unterschiedlichen, jeweils UV-A- oder UV-C-anregbaren Kapsel-Lumineszenzpigmenten vorhanden sein. Zum anderen kann in einer Druckfarbe ein Kapsel-Lumineszenzpigment enthalten sein, welches eine Mischung aus unterschiedlichen, jeweils UV-A- bzw. UV-C-anregbaren Farbstoffen enthält.

Gemäß einer weiteren bevorzugten Ausführungsform ist mindestens ein Kapsel-Lumineszenzpigment des Lumineszenzfarbsystems sowohl mit UV-A-Strahlung, als auch mit UV-C-Strahlung anregbar. Bevorzugt zeigt das Kapsel-Lumineszenzpigment bei Anregung mit UV-A- und UV-C-Strahlung jeweils unterschiedliche Emissionsspektren. Besonders bevorzugt sind alle Kapsel-Lumineszenzpigmente des Lumineszenzfarbsystems sowohl mit UV-A-Strahlung, als auch mit UV-C-Strahlung anregbar, und zeigen bei Anregung mit UV-A- und UV-C-Strahlung jeweils unterschiedliche Emissionsspektren

Gemäß einer weiteren bevorzugten Ausführungsform ist mindestens ein Kapsel-Lumineszenzpigment des Lumineszenzfarbsystems sowohl mit UV-A-Strahlung, als auch mit UV-C-Strahlung anregbar und zeigt bei Anregung mit UV-A- und UV-C-Strahlung jeweils ein unterschiedliches Emissionsspektrum, und mindestens ein weiteres Kapsel-Lumineszenzpigment des Lumineszenzfarbsystems zeigt bei Anregung mit UV-A- und UV-C-Strahlung jeweils das gleiche Emissionsspektrum.

Gemäß einer weiteren bevorzugten Ausführungsform ist mindestens ein Kapsel-Lumineszenzpigment des Lumineszenzfarbsystems sowohl mit UV-A-Strahlung, als auch mit UV-C-Strahlung anregbar. Bevorzugt zeigt das Kapsel-Lumineszenzpigment bei Anregung mit UV-A- und UV-C-Strahlung jeweils das gleiche Emissionsspektrum.

Besonders bevorzugt sind alle Kapsel-Lumineszenzpigmente des Lumineszenzfarbsystems sowohl mit UV-A-Strahlung, als auch mit UV-C-Strahlung anregbar, und zeigen bei Anregung mit UV-A- und UV-C-Strahlung jeweils gleiche Emissionsspektren.

Lumineszenzfarbsysteme mit unterschiedlich anregbaren Komponenten sind im Stand der Technik allgemein bekannt (siehe z.B. die EP 2602119 A1).

Bei den im Kern der Kern-Hülle-Teilchen der Kapsel-Lumineszenzpigmente eingesetzten Lumineszenzfarbstoffen kann es sich um fluoreszierende (schnell abklingende) oder phosphoreszierende (langsam abklingende) Farbstoffe handeln.

Die meisten rein organischen Farbstoffe sind Fluorophore und emittieren nach Anregung bereits nach wenigen Nanosekunden. Einige Farbstoffe können jedoch z.B. nach Anregung einen angeregten Triplettzustand ausbilden, welcher nur langsam, also phosphoreszierend, durch Lichtemission in den Grundzustand übergeht. Ebenso zeigen viele metallorganische Komplexe eine langsame Abklingzeit im Bereich von Mikrosekunden bis Millisekunden. Die wissenschaftliche Einteilung verschiedener Stoffe in Fluoreszenz und Phosphoreszenz ist dabei umstritten und nicht einheitlich definiert. Im Sinne dieser Erfindung wird die Unterscheidung in fluoreszierende und phosphoreszierende Stoffe daher allein basierend auf der Länge der Abklingzeit der Lumineszenzemission getroffen.

Der Aspekt der Abklingzeit ist bei Wertdokumenten insbesondere für die Maschinenlesbarkeit auf automatisierten Sensoren von Bedeutung. Hier wird bevorzugt die Phosphoreszenz der Aufdrucke des Wertdokuments gemessen, weil diese unabhängig von der störenden Fluoreszenz des Untergrunds und unabhängig von Verunreinigungen etc. gemessen werden kann.

Im Rahmen dieser Erfindung gelten Stoffe mit einer Abklingzeit >50µs daher als phosphoreszierend und Stoffe mit einer Abklingzeit <50 µs als fluoreszierend, da in diesem Bereich die Grenze der einfachen maschinellen Unterscheidbarkeit verläuft.

Gemäß einer bevorzugten Ausführungsform handelt es sich daher bei mindestens einem der im Lumineszenzfarbsystem eingesetzten Lumineszenzfarbstoffe um einen langsam abklingenden (phosphoreszierenden) Farbstoff, bevorzugt um einen Farbstoff mit einer Abklingzeit von mehr als 50 µs, besonders bevorzugt mehr als 100 µs. Insbesondere handelt es sich bevorzugt um einen Seltenerdkomplex mit einer Abklingzeit von mehr als 100 µs.

Unabhängig davon, ob die Fluoreszenz oder Phosphoreszenz des Druckbilds maschinell ausgewertet wird, ergeben sich hier durch die Verwendung von Kapsel-Lumineszenzpigmenten mehrere Anwendungsvorteile. Erst durch die gleichartigen Lichtechtheiten und Chemikalienstabilitäten aller Kapsel-Lumineszenzpigmente des erfindungsgemäßen Lumineszenzfarbsystems ist eine zuverlässige maschinelle Auswertung möglich. Dies ermöglicht erstmals eine zuverlässige Verwendung der spektralen Intensitätsverhältnisse eines Fluoreszenzdrucks als maschinenlesbares Echtheitsmerkmal.

Beispielsweise werden bei Überprüfung der unterschiedlichen Farbkomponenten keine alterungsbedingten Drifts beobachtet, d.h. die Lumineszenzfarbverhältnisse bleiben konstant. Insbesondere kann es sich nicht ereignen, dass eine Farbkomponente durch Verblassen oder Einwirkung eines Lösemittels nicht mehr detektierbar ist. Es wird daher immer das korrekte gesamte Druckbild gemessen, was eine Echtheitsbestimmung deutlich vereinfacht. Beim Verwenden einer Mischung aus Lumineszenzpigmenten gemäß dem Stand der Technik, welche jeweils unterschiedliche Eigenschaften besitzen, werden jedoch oft Fehlsignale erzeugt, z.B. weil eine Lumineszenzmarkierung durch Einwirkung von Lösungsmitteln verschmiert (z.B. bei einer Lackierung der Banknote zur Erhöhung der Verschmutzungsresistenz) und die Markierung daher nicht mehr die vom Sensor erwartete Position und Größe besitzt, oder weil aufgrund von Umweltfaktoren wie Feuchtigkeit und Sonneneinstrahlung eine einzelne Farbkomponente vernichtet wurde und daher das gemessene Lumineszenz-Druckbild nicht mit dem erwarteten Lumineszenz-Druckbild übereinstimmt.

Gemäß einer bevorzugten Ausführungsform besitzen die Kapsel-Lumineszenzpigmente des Lumineszenzfarbsystems keine bzw. nur eine schwache (absorptionsbasierte) Eigenfärbung. Hierdurch ist es möglich, ein für das menschliche Auge nicht oder kaum sichtbares Druckbild auf das Wertdokument aufzubringen, welches erst durch UV-Bestrahlung sichtbar wird. Ebenso wird durch den Aufdruck der lumineszierenden Komponenten das restliche (absorptionsbasierte) Farbbild des Wertdokuments nicht gestört. Beispielsweise kann auf einer Banknote in einem ansonsten weißen oder hellen Bereich der Banknote ein unsichtbares Symbol aufgedruckt werden, welches dem Betrachter bei Tageslicht nicht auffällt, jedoch im Dunklen bei UV-Bestrahlung deutlich erkennbar ist. Bevorzugt beträgt der durch das Kapsel-Lumineszenzpigment verursachte (absorptionsbasierte) Farbunterschied (z.B. im Vergleich zu einem Aufdruck ohne das Kapsel-Lumineszenzpigment) ΔE < 10, weiter bevorzugt ΔE < 5, insbesondere bevorzugt ΔE < 2.

Dabei bezeichnet ΔE den euklidischen Abstand der (L*,a*,b*)-Koordinaten der beiden (absorptionsbasierten) Farb-Orte.

Typische Applikationsbedingungen für Lumineszenzfarben liegen z.B. bei 15% Lumineszenzpigment im Drucklack bei 0,5-8 g/m² Andruckstärke, bevorzugt 2,0g/m² Andruckstärke.

Gemäß einem weiteren bevorzugten Ausführungsfall besitzen die Kapsel-Lumineszenzpigmente des Lumineszenzfarbsystems eine (absorptionsbasierte) Eigenfärbung. Der Aufdruck mit den lumineszierenden Komponenten ist dann sichtbar, und kann z.B. Teil des restlichen (absorptionsbasierten) Farbbilds des Wertdokuments sein.

Gemäß einer weiteren bevorzugten Ausführungsform sind in der Druckfarbe der Kapsel-Lumineszenzpigmente zusätzliche (nichtlumineszierende, absorptionsbasierte) Farbpigmente bzw. Farbstoffe enthalten, um den Aufdruck gezielt einzufärben, beziehungsweise wird das Kapsel-Lumineszenzpigment einer "normalen" Druckfarbe zugegeben. Hierdurch ist kein zusätzlicher Druckschritt notwendig, sondern das lumineszierende Pigment wird gleichzeitig mit dem restlichen Farbbild der Banknote aufgebracht. Beispielsweise werden lumineszierende Pigmente oft der Druckfarbe für die Zifferung der Seriennummer einer Banknote beigemischt, oder befinden sich in anderen farbigen Markierungen des Wertdokuments.

Gemäß einem bevorzugten Anwendungsfall sind die (absorptionsbasierte) Körperfarbe und der durch Lumineszenz emittierte Farbeindruck eines Aufdrucks des Lumineszenzfarbsystems gleich.

Hierdurch ist es möglich, z.B. eine mehrfarbige Flagge oder ein Portrait einer Staatsperson farblich auf dem Wertdokument abzubilden, und dann im Dunklen bei Bestrahlung mit UV-Licht durch die Lumineszenz das gleiche Farbbild wiederzuerkennen.

Gemäß einem bevorzugten Anwendungsfall haben die Kapsel-Lumineszenzpigmente des Lumineszenzfarbsystems einheitliche Korngrößen, welche je nach Druckanwendung eingestellt werden können.

Zum Beispiel besitzen Pigmente für den Einsatz in Offsetdruckanwendungen bevorzugt eine Korngröße (d99) < 12µm. Für den Einsatz in Siebdruckanwendungen besitzen die Pigmente bevorzugt eine Korngröße (d99) < 25 µm. Für den Einsatz in Stahlstichtiefdruck-Anwendungen besitzen die Pigmente bevorzugt eine Korngröße (d99) <6 µm.

Gemäß einer bevorzugten Ausführungsform unterscheidet sich die Korngröße (d99) der jeweiligen Kapsel-Lumineszenzpigmentsorten des Lumineszenzfarbsystems mit unterschiedlichen Lumineszenzemissionen untereinander um weniger als 30%, weiter bevorzugt um weniger als 20%, insbesondere bevorzugt um weniger als 10%.

Gemäß einer weiteren bevorzugten Ausführungsform unterscheidet sich die Korngröße (d50) der jeweiligen Kapsel-Lumineszenzpigmentsorten des Lumineszenzfarbsystems mit unterschiedlichen Lumineszenzemissionen untereinander um weniger als 30%, weiter bevorzugt um weniger als 20%, insbesondere bevorzugt um weniger als 10%.

Gemäß einer bevorzugten Ausführungsform werden neben den Kapsel-Lumineszenzpigmenten noch weitere Pigmente und / oder Zusatzstoffe eingesetzt, um in der Applikation bestimmte Effekte zu erzielen. Beispielsweise können Druckfarben neben den Kapsel-Lumineszenzpigmenten noch Absorberpigmente (z.B. im IR oder im sichtbaren Spektralbereich) zugesetzt werden, um die Eigenfarbe einzustellen oder um als zusätzliches Sicherheitsmerkmal zu wirken. Weiterhin können zusätzliche Lumineszenzpigmente zugefügt werden, beispielsweise anorganische Phosphore oder NIR-Lumineszenzpigmente, welche die Maschinenlesbarkeit verbessern bzw. als zusätzliches Sicherheitsmerkmal wirken können. Weitere typische Additive sind z.B. Aufheller, Stabilisatoren, Emulgatoren, den Brechungsindex anpassende Substanzen, Verdünner, Duftstoffe, etc.

Weitere bevorzugte Ausführungsformen des erfindungsgemäßen Lumineszenzfarbsystems sind nachstehend aufgeführt:
- Mindestens zwei, bevorzugt mindestens drei, Kapsel-Lumineszenzpigmente mit jeweils unterschiedlichen Emissionsspektren, bevorzugt unterschiedlichen Farbeindrücken der Lumineszenzemission. In einem bevorzugten Anwendungsfall liegen die Kapsel-Lumineszenzpigmente getrennt voneinander vor, zum Beispiel je ein rot lumineszierendes und ein blau lumineszierendes Kapsel-Lumineszenzpigment. In einem weiteren bevorzugten Anwendungsfall liegen die Kapsel-Lumineszenzpigmente miteinander gemischt vor, z.B. eine Mischung aus einem rot lumineszierenden und einem blau lumineszierenden Kapsel-Lumineszenzpigment.
- Mindestens ein Lumineszenz-Farbkonzentrat mit insgesamt mindestens zwei, bevorzugt mindestens drei, Kapsel-Lumineszenzpigmenten mit jeweils unterschiedlichen Emissionsspektren, bevorzugt unterschiedlichen Farbeindrücken der Lumineszenzemission.

In einem bevorzugten Anwendungsfall liegen mindestens zwei Lumineszenz-Farbkonzentrate vor, welche jeweils mindestens eine Sorte der Kapsel-Lumineszenzpigmente beinhalten. Beispielsweise ein erstes Farbkonzentrat mit rot lumineszierenden Kapsel-Lumineszenzpigmenten und ein zweites Farbkonzentrat mit blau lumineszierenden Kapsel-Lumineszenzpigmenten. In einem weiteren bevorzugten Anwendungsfall liegt mindestens ein Lumineszenz-Farbkonzentrat vor, welches mindestens zwei Sorten der Kapsel-Lumineszenzpigmente beinhaltet. Beispielsweise ein Farbkonzentrat welches eine Mischung aus rot lumineszierenden Kapsel-Lumineszenzpigmenten und blau lumineszierenden Kapsel-Lumineszenzpigmenten beinhaltet.

Die Lumineszenz-Farbkonzentrate werden zum Abmischen der Farbtöne bzw. der Lumineszenz-Farbtöne unterschiedlicher lumineszierender Druckfarben verwendet.
- Mindestens eine Druckfarbe mit insgesamt mindestens zwei, bevorzugt mindestens drei, erfindungsgemäßen Kapsel-Lumineszenzpigmenten. In einem bevorzugten Anwendungsfall liegen die Kapsel-Lumineszenzpigmente separat in verschiedenen Druckfarben vor, zum Beispiel je eine Druckfarbe mit einem rot lumineszierenden Kapsel-Lumineszenzpigment und eine Druckfarbe mit einem blau lumineszierenden Kapsel-Lumineszenzpigment. In einem weiteren bevorzugten Anwendungsfall liegen die unterschiedlichen Kapsel-Lumineszenzpigmente gemischt in der gleichen Druckfarbe vor, z.B. eine Druckfarbe mit einer Mischung aus einem rot lumineszierenden und einem blau lumineszierenden Kapsel-Lumineszenzpigment.
- Ein Wertdokument mit mindestens zwei, bevorzugt mindestens drei, unterschiedlichen Kapsel-Lumineszenzpigmenten. In einem bevorzugten Anwendungsfall sind die Kapsel-Lumineszenzpigmente an unterschiedlichen Stellen des Wertdokuments aufgebracht, beispielsweise ein Aufdruck mit rot lumineszierenden Kapsel-Lumineszenzpigmenten und ein Aufdruck mit blau lumineszierenden Kapsel-Lumineszenzpigmenten. In einem weiteren bevorzugten Anwendungsfall sind die Kapsel-Lumineszenzpigmente an mindestens einer gleichen Stelle des Wertdokumentes aufgebracht, beispielsweise ein Aufdruck aus einer Mischung aus rot lumineszierenden und blau lumineszierenden Kapsel-Lumineszenzpigmenten.

Die Erfindung wird nachstehend anhand von Ausführungsbeispielen näher veranschaulicht.

### Ausführungsbeispiel 1: Pigmentsystem aus roten und grünen Kapsel-Lumineszenzpigmenten mit Thermoplast-Kern und Kondensationspolymer-Hülle

Als rot lumineszierendes Pigment wird ein Kern-Hülle-Teilchen mit einem Polymethylmethacrylat-Kern und einer Melamin-Formaldehyd-Hülle verwendet, welches als im Kern gelöste Farbstoffe eine Mischung aus den drei Farbstoffen N-(2-(4-oxo-4H-benzo[d][1,3]oxazin-2-yl)phenyl)naphthalen-2-sulfonamid (C₂₄H₁₆N₂O₄S), 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈) und Eu(TTA)₃(TPPO)₂ (TTA = Thenoyltrifluoroaceton; TPPO = Triphenylphosphinoxid) enthält.

Es entspricht einem Kapsel-Lumineszenzpigment gemäß der bevorzugten Variante 1.

Der Lumineszenzfarbstoff Eu(TTA)₃(TPPO)₂ dient dabei insbesondere dem Angleich der Lichtechtheit bei Wollskala 1 zwischen den rot lumineszierenden und grün lumineszierenden Kapsel-Lumineszenzpigmenten dieses Ausführungsbeispiels.

### Herstellung des roten Lumineszenzpigments:

27 g Polymethylmethacrylat (PMMA) der mittleren Molmasse 100000 g/mol, 1500 mg N-(2-(4-oxo-4H-benzo[d][1,3]oxazin-2-yl)phenyl)naphthalen-2-sulfonamid (C₂₄H₁₆N₂O₄S), 100 mg 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈), 100 mg Eu(TTA)₃(TPPO)₂ und 250 mg Dibutylphthalat werden unter Rühren in 500 g Dichlormethan gelöst (Lösung A).

78 g Melamin und 111 g Paraformaldehyd werden in 1000 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung B).

In 2475 g Wasser werden 25 g Natriumdodecylsulfat gelöst (Lösung C). Lösung A wird zu Lösung C gegeben und 30 Sekunden mit einem Dispergierwerkzeug (Ultraturrax) dispergiert. Während dieser Zeit werden 200 mL Lösung B und 10 mL Essigsäure zugegeben. Anschließend wird die Dispersion mit einem Magnetrührer weiter gerührt.

Nach 2 h Rühren bei Raumtemperatur wird die Dispersion auf 39°C erhitzt und 3 h bei dieser Temperatur gehalten, um das Dichlormethan zu verdampfen. Anschließend werden weitere 200 mL der Lösung B zugegeben und die Temperatur auf 70°C erhöht. Diese Temperatur wird weitere 3 h gehalten. Die erhaltenen Partikel werden von der Lösung separiert, mit Wasser gewaschen und bei 60°C getrocknet.

Es werden ca. 60 g eines bei Bestrahlung mit UV-Licht der Wellenlänge 365 nm rot fluoreszierenden Pigments erhalten.

Als grün lumineszierendes Pigment wird ein Kern-Hülle-Teilchen mit einem Polymethylmethacrylat-Kern und einer Melamin-Formaldehyd-Hülle verwendet, welches als im Kern gelösten Farbstoff N-(2-(4-oxo-4H-benzo [d] [1,3] oxazin-2-yl)phenyl)naphthalen-2-sulfonamid (C₂₄H₁₆N₂O₄S) enthält.

Es entspricht einem Kapsel-Lumineszenzpigment gemäß der bevorzugten Variante 1.

### Herstellung des grünen Lumineszenzpigments:

27 g Polymethylmethacrylat (PMMA) der mittleren Molmasse 100000 g/mol, 1500 mg N-(2-(4-oxo-4H-benzo[d][1,3]oxazin-2-yl)phenyl)naphthalen-2-sulfonamid (C₂₄H₁₆N₂O₄S) und 250 mg Dibutylphthalat werden unter Rühren in 500 g Dichlormethan gelöst (Lösung A).

78 g Melamin und 111 g Paraformaldehyd werden in 1000 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung B).

In 2475 g Wasser werden 25 g Natriumdodecylsulfat gelöst (Lösung C). Lösung A wird zu Lösung C gegeben und 30 Sekunden mit einem Dispergierwerkzeug (Ultraturrax) dispergiert. Während dieser Zeit werden 200 mL Lösung B und 10 mL Essigsäure zugegeben. Anschließend wird die Dispersion mit einem Magnetrührer weiter gerührt.

Nach 2 h Rühren bei Raumtemperatur wird die Dispersion auf 39°C erhitzt und 3 h bei dieser Temperatur gehalten, um das Dichlormethan zu verdampfen. Anschließend werden weitere 200 mL der Lösung B zugegeben und die Temperatur auf 70°C erhöht. Diese Temperatur wird weitere 3 h gehalten. Die erhaltenen Partikel werden von der Lösung separiert, mit Wasser gewaschen und bei 60°C getrocknet.

Es werden ca. 60 g eines bei Bestrahlung mit UV-Licht der Wellenlänge 365 nm grün fluoreszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

### 1a) Pulvermischung aus verschiedenen Lumineszenzpigmenten

50g des rot lumineszierenden Pigments und 50g des grün lumineszierenden Pigments werden miteinander vermischt. Die Mischung luminesziert gelb.

### 1b) Druckfarbe aus Pulvermischung mit verschiedenen Lumineszenzpigmenten

Die Pulvermischung aus Ausführungsbeispiel 1a wird mit Hilfe eines Dreiwalzenstuhles in Offset-Drucklack (Sicpa Holding SA) eingearbeitet. Der Pigmentierungsgrad der Farbe beträgt dabei 15 Gewichtsprozent. Die erhaltene Offset-Druckfarbe luminesziert gelb.

Aufgrund der Gleichartigkeit der in der Mischung enthaltenen Pigmente gibt es keine Auftrennung der Pigmente während oder nach dem Farbherstellungsprozess.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat unter anderem anwendungstechnische Vorteile (schnellere Einarbeitung, kein Stauben bei der Einarbeitung, ...)

### 1c) Druckfarbe aus verschiedenen Druckfarben

Eine erste Druckfarbe wird mit dem rot lumineszierenden Pigment erstellt, indem dieses mit Hilfe eines Dreiwalzenstuhles in Offset-Drucklack (Sicpa Holding SA) eingearbeitet wird. Der Pigmentierungsgrad der Druckfarbe beträgt 15 Gewichtsprozent. Die Farbe luminesziert rot.

Eine zweite Druckfarbe wird mit dem grün lumineszierenden Pigment erstellt, indem dieses mit Hilfe eines Dreiwalzenstuhles in Offset-Drucklack (Sicpa Holding SA) eingearbeitet wird. Der Pigmentierungsgrad der Druckfarbe beträgt 15 Gewichtsprozent. Die Farbe luminesziert grün.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat u.a. anwendungstechnische Vorteile (schnellere Einarbeitung, kein Stauben bei der Einarbeitung, ...)

Durch Mischen gleicher Anteile der ersten und der zweiten Druckfarbe wird eine dritte Druckfarbe erstellt. Diese luminesziert gelb. Sie unterscheidet sich inhaltlich nicht von der Druckfarbe in Ausführungsbeispiel 1b. Aufgrund der Gleichartigkeit der in der ersten und zweiten Farbe verwendeten Pigmente verhalten sich diese in der Druckfarbe identisch und können ohne Inkompatibilitäten vermischt werden.

Somit ist es möglich, Mischfarben entweder aus Pulvermischungen (1b) oder aus den Grundfarben der reinen Pigmente (1c) zu erstellen.

### 1d) Wertdokument mit separatem Aufdruck aus zwei verschiedenen Lumineszenzpigmenten

Die rot lumineszierende Farbe und die grün lumineszierende Farbe aus Ausführungsbeispiel 1c werden jeweils auf verschiedene Stellen desselben Wertdokuments gedruckt. Die Andruckstärke beträgt dabei 2 g/m². Die Andrucke der beiden Farben bilden hierbei zwei nebeneinander auf dem Wertdokument aufgedruckte Streifen mit der jeweiligen Größe 2x4 cm², welche jeweils rot und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist in der nachfolgenden Tabelle dargestellt.

| Wollskala | Restintensität rot [%] | Restintensität grün [%] | Differenz [Prozentpunkte] |
|---|---|---|---|
| Anfangswert | 100 | 100 | 0 |
| 1 | 90 | 88 | 2 |
| 2 | 82 | 79 | 3 |
| 3 | 72 | 67 | 5 |

Die gedruckten Farben verlieren nach gleicher Lichteinwirkung in etwa die gleiche Menge an Lumineszenzintensität. Daher ändert sich das relative Verhältnis der Emissionsintensität bei beiden Farben für das Auge nicht. Das gesamte Sicherheitsmerkmal kann einheitlich erkannt werden und eine maschinelle Auswertung des konstanten Intensitätsverhältnisses der unterschiedlichen Emissionen ist möglich.

Weitere, derart bedruckte Wertdokumente werden gemäß Testverfahren A30 bzw. A5 auf ihre Chemikalienstabilität hin getestet.

| Testsubstanz | Restintensität rot [%] | Restintensität grün [%] | Differenz [Prozentpunkte] |
|---|---|---|---|
| Ethylacetat, 30 Minuten | 99 | 99 | 0 |
| Toluol, 30 Minuten | 98 | 99 | 1 |
| Salzsäure 5%, 30 Minuten | 100 | 99 | 1 |
| Natriumhydroxid 2%, 30 Minuten | 98 | 98 | 0 |
| Natriumhypochlorit, 5% aktives Chlor, 30 Minuten | 99 | 98 | 1 |
| Aceton, 5 Minuten | 99 | 99 | 0 |

Die Andrucke zeigen aufgrund der gleichartigen Chemikalienstabilität der Lumineszenzpigmente keine großen relativen Unterschiede in der verbleibenden Lumineszenzintensität. Daher ändert sich das relative Verhältnis der Emissionsintensität bei beiden Farben für das Auge nicht.

Das gesamte Sicherheitsmerkmal kann einheitlich erkannt werden und eine maschinelle Auswertung des konstanten Intensitätsverhältnisses der unterschiedlichen Emissionen ist möglich.

### 1e) Wertdokument mit Aufdruck einer Mischung aus zwei verschiedenen Lumineszenzpigmenten

Die gelb lumineszierende Mischfarbe aus Ausführungsbeispiel 1c wird auf ein Wertdokument gedruckt. Die Andruckstärke beträgt dabei 2 g/m². Der Andruck bildet hierbei ein auf dem Wertdokument aufgedrucktes Quadrat der Größe 4x4 cm², welches gelb luminesziert.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,4258; y=0,4775 | - |
| 1 | x=0,4271; y=0,4760 | 0,00198 |
| 2 | x=0,4280; y=0,4749 | 0,00340 |
| 3 | x=0,4237; y=0,4811 | 0,00416 |

Aufgrund der gleichartigen Lichtechtheit der beiden eingesetzten Pigmente ändert sich der Farbeindruck der Emission der Mischfarbe kaum. Ein Betrachter wird daher keine Änderung des Farbtons der Lumineszenz wahrnehmen, auch wenn das Wertdokument z.B. längerer Sonneneinstrahlung ausgesetzt wurde.

Das Sicherheitsmerkmal kann somit klar von einem Betrachter erkannt werden und eine maschinelle Auswertung des Spektrums bzw. des Normfarbwerts ist möglich.

Weitere derart bedruckte Wertdokumente werden gemäß Testverfahren A30 auf ihre Chemikalienstabilität hin getestet. Die Veränderung des Farbeindrucks der Emission (ΔD) relativ zum Wert vor der Chemikalienbehandlung des Andrucks ist in nachfolgender Tabelle dargestellt.

| Testsubstanz | Normfarbwerte Emission | ΔD |
|---|---|---|
| (vor Behandlung) | x=0,4258; y=0,4775 | - |
| Ethylacetat, 30 Minuten | x=0,4259; y=0,4773 | 0,00022 |
| Toluol, 30 Minuten | x=0,4254; y=0,4781 | 0,00072 |
| Salzsäure 5%, 30 Minuten | x=0,4262; y=0,4770 | 0,00064 |
| Natriumhydroxid 2%, 30 Minuten | x=0,4260; y=0,4772 | 0,00036 |
| Natriumhypochlorit, 5% aktives Chlor, 30 Minuten | x=0,4262; y=0,4769 | 0,00072 |

Die Andrucke zeigen aufgrund der gleichartigen Chemikalienstabilität der Lumineszenzpigmente, welche in der Mischung eingesetzt wurden, keine Verschiebung des Farbtons der Emission. Daher ändert sich der wahrgenommene Farbton der Lumineszenz des Andrucks auch nach Behandlung mit Lösemitteln für das Auge nicht.

Das Sicherheitsmerkmal kann somit klar von einem Betrachter erkannt werden und eine maschinelle Auswertung des Spektrums bzw. des Normfarbwerts ist möglich.

### 1f) Aufdruck mit Echtfarbenfluoreszenz

Zusätzlich zu der roten und grünen Farbe aus Ausführungsbeispiel 1c wird eine dritte, blau lumineszierende Druckfarbe hergestellt. Es handelt sich dabei um ein analog aufgebautes Pigment, welches relativ zur Kernmasse 5 Gewichtsprozent des Farbstoffs 4,4'-Bis(benzoxazol-2-yl)stilben (C₂₈H₁₈N₂O₂) enthält und analog in eine Offset-Druckfarbe eingearbeitet wurde.

Alle drei Farben lumineszieren bei UV-Bestrahlung mit 365 nm.

Mit den drei Farben wird ein Echtfarbenbild auf ein Wertdokument gedruckt, z.B. ein RGB-Farbkreis mit weißem Punkt in der Mitte. Durch Kombination der drei Grundfarben rot, grün und blau können dabei durch Überlagerung der Druckfarben beliebige Mischfarben oder Farbverläufe erzeugt werden. Durch die gleichartige Lichtechtheit und Chemikalienstabilität der einzelnen Grundfarben bleiben die Farbtöne der Mischfarben und Farbverläufe auch bei Sonnenbestrahlung oder Behandlung mit Lösemitteln in ihrem Farbton unverändert.

### Gegenbeispiel 1: Lumineszenzsystem aus roten und grünen Pigmenten ohne angepasste Stabilitäten

Als rot lumineszierendes Pigment wird ein mit Eu(TTA)₃(TPPO)₂ beladenes PMMA-Partikel ohne MF-Hülle verwendet. Es ist ähnlich zum rot lumineszierenden Pigment des Ausführungsbeispiels 1 aufgebaut, besitzt jedoch keine zusätzliche Schutzhülle (und daher keine angepasste Chemikalienstabilität) und keine angepasste Farbstoffzusammensetzung (und daher keine angepasste Lichtechtheit).

Als grün lumineszierendes Pigment wird das gleiche Kapselpigment verwendet wie im Ausführungsbeispiel 1.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die beiden Pigmente werden analog zu den Schritten im Ausführungsbeispiel 1 in Druckfarben eingebracht und auf Wertdokumente gedruckt.

Gegenbeispiel zu "Wertdokument mit separatem Aufdruck aus zwei verschiedenen Lumineszenzpigmenten":
Auf ein Wertdokument werden analog zum Ausführungsbeispiel 1d zwei nebeneinander liegende Streifen mit der jeweiligen Größe 2x4 cm² gedruckt, welche jeweils rot und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist nachfolgender Tabelle dargestellt.

| Wollskala | Restintensität rot [%] | Restintensität grün [%] | Differenz [Prozentpunkte] |
|---|---|---|---|
| Anfangswert | 100 | 100 | 0 |
| 1 | 27 | 89 | 62 |
| 2 | 14 | 80 | 66 |
| 3 | 9 | 68 | 59 |

Die Andrucke der beiden Farben unterscheiden sich deutlich in ihrer Lichtechtheit und verlieren unterschiedlich große Anteile ihrer Lumineszenzintensität bei Bestrahlung mit Licht. Daher ändert sich das relative Verhältnis der Emissionsintensität der beiden Farben für einen Betrachter deutlich. Der rot lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

Weitere derart bedruckte Wertdokumente werden gemäß Testverfahren A30 auf ihre Chemikalienstabilität hin getestet.

| Testsubstanz | Restintensität rot [%] | Restintensität grün [%] | Differenz [Prozentpunkte] |
|---|---|---|---|
| Ethylacetat, 30 Minuten | 1 | 99 | 98 |
| Toluol, 30 Minuten | 0 | 99 | 99 |
| Salzsäure 5%, 30 Minuten | 70 | 100 | 30 |
| Natriumhydroxid 2%, 30 Minuten | 65 | 98 | 33 |
| Natriumhypochlorit, 5% aktives Chlor, 30 Minuten | 40 | 98 | 58 |
| Aceton, 5 Minuten | 0 | 99 | 99 |

Die Andrucke der beiden Farben zeigen deutlich unterschiedliche Chemikalienstabilitäten. Daher ändert sich das relative Verhältnis der Emissionsintensität bei beiden Farben für das Auge deutlich. Der rot lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

### Gegenbeispiel zu "Wertdokument mit Aufdruck einer Mischung aus zwei verschiedenen Lumineszenzpigmenten"

Auf ein Wertdokument wird analog zum Ausführungsbeispiel 1e ein Quadrat der Größe 4x4 cm² gedruckt, welches gelb luminesziert, wobei die verwendete Druckfarbe eine Mischung des roten und des grünen Lumineszenzpigments des Gegenbeispiels 1 enthält.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,4273; y=0,5225 | - |
| 1 | x=0,3719; y=0,5669 | 0,07099 |
| 2 | x=0,3589; y=0,5773 | 0,08764 |
| 3 | x=0,3544; y=0,5810 | 0,09347 |

Die beiden in der Mischung eingesetzten Lumineszenzpigmente unterscheiden sich in ihren Lichtechtheiten, wodurch sich der Farbeindruck der Emission durch Bestrahlung mit Licht deutlich ändert.

Ein Betrachter wird daher eine klare Änderung des Farbtons der Lumineszenz von gelb nach grün wahrnehmen, wenn das Wertdokument z.B. längerer Sonneneinstrahlung ausgesetzt wurde.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

Weitere derart bedruckte Wertdokumente werden gemäß Testverfahren A30 auf ihre Chemikalienstabilität hin getestet.

| Testsubstanz | Normfarbwerte Emission | ΔD |
|---|---|---|
| (vor Behandlung) | x=0,4273; y=0,5225 | - |
| Ethylacetat, 30 Minuten | x=0,3406; y=0,5920 | 0,11111 |
| Toluol, 30 Minuten | x=0,3394; y=0,5930 | 0,11267 |
| Salzsäure 5%, 30 Minuten | x=0,4061; y=0,5395 | 0,02717 |
| Natriumhydroxid 2%, 30 Minuten | x=0,4032; y=0,5418 | 0,03087 |
| Natriumhypochlorit, 5% aktives Chlor, 30 Minuten | x=0,3817; y=0,5590 | 0,05840 |

Die Andrucke zeigen aufgrund der unterschiedlichen Chemikalienstabilität der in der Mischung eingesetzten Lumineszenzpigmente eine Verschiebung des Farbtons der Emission nach Behandlung mit bestimmten Lösemitteln. Daher ändert sich die wahrgenommene Lumineszenzfarbe des Andrucks nach Behandlung mit Lösemitteln für das Auge deutlich. Die Lumineszenz des Andrucks verschiebt sich von gelb nach grün.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

### Ausführungsbeispiel 2: Pigmentsystem aus roten und grünen Kapsel-Lumineszenzpigmenten mit Duromer-Kern und Kondensationspolymer-Hülle

Als rot lumineszierendes Pigment wird ein Kern-Hülle-Teilchen mit einem Polyharnstoff-Kern und einer Melamin-Formaldehyd-Hülle verwendet, welches als im Kern verteilte bzw. gelöste Farbstoffe eine Mischung aus den drei Farbstoffen N-(2-(4-oxo-4H-benzo[d][1,3]oxazin-2-yl)phenyl)naphthalen-2-sulfonamid (C₂₄H₁₆N₂O₄S), 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈) und Eu(TTA)₃(TPPO)₂ (TTA = Thenoyltrifluoroaceton; TPPO = Triphenylphosphinoxid) enthält.

Es entspricht einem Kapsel-Lumineszenzpigment gemäß der bevorzugten Variante 2.

Der Lumineszenzfarbstoff Eu(TTA)₃(TPPO)₂ dient dabei insbesondere dem Angleich der Lichtechtheit bei Wollskala 1 zwischen den rot lumineszierenden und grün lumineszierenden Kapsel-Lumineszenzpigmenten dieses Ausführungsbeispiels.

### Herstellung des roten Lumineszenzpigments:

In einem Laborkneter werden die Komponenten
70,5 g Isophorondiisocyanat,
24,2 g Benzamid,
15,2 g N-(2-(4-oxo-4H-benzo[d][1,3]oxazin-2-yl)phenyl)naphthalen-2-sulfonamid (C₂₄H₁₆N₂O₄S),
0,6 g 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈),
6,1 g Eu(TTA)₃(TPPO)₂
bei 140°C für 30 min geknetet. Anschließend werden 25.10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen. Von diesem Pulver werden 100 g in 1.3 1 Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 3 1 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 365 nm rot fluoreszierenden Pigments erhalten.

Als grün lumineszierendes Pigment wird ein Kern-Hülle-Teilchen mit einem Polyharnstoff-Kern und einer Melamin-Formaldehyd-Hülle verwendet, welches als im Kern verteilten bzw. gelösten Farbstoff N-(2-(4-oxo-4H-benzo [d] [1,3] oxazin-2-yl)phenyl)naphthalen-2-sulfonamid (C₂₄H₁₆N₂O₄S) enthält.

Es entspricht einem Kapsel-Lumineszenzpigment gemäß der bevorzugten Variante 2.

### Herstellung des grünen Lumineszenzpigments:

In einem Laborkneter werden die Komponenten
73,2 g Isophorondiisocyanat,
26,1 g Benzamid,
15,3 g N-(2-(4-oxo-4H-benzo[d][1,3]oxazin-2-yl)phenyl)naphthalen-2-sulfonamid (C₂₄H₁₆N₂O₄S),
bei 140°C für 30 min geknetet. Anschließend werden 25.10 g Melamin zugegeben und die Mischung bis zum Erstarren geknetet. Das erhaltene Pulver wird mit einer Rührwerkskugelmühle mit ca. 1 mm großen Zirkonoxidmahlkugeln auf eine Korngröße (d99) von 10µm vermahlen. Von diesem Pulver werden 100 g in 1.3 1 Wasser gegeben und mit einem Homogenisator dispergiert. Zu dieser Mischung werden 900 ml einer 20%igen wässrigen Lösung aus Hexahydroxymethylmelamin gegeben und mit 8 ml konzentrierter Essigsäure versetzt. Die erhaltene Reaktionsmischung wird für 2 h bei 70 °C erhitzt. Das erhaltene beschichtete Pigment wird abzentrifugiert und mit 3 1 Wasser gewaschen. Nach einem letzten Zentrifugationsschritt wird das Pigment bei 60°C in einem Trockenschrank getrocknet.

Es werden ca. 175 g eines bei Bestrahlung mit UV-Licht der Wellenlänge 365 nm grün fluoreszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

### 2a) Pulvermischung aus verschiedenen Lumineszenzpigmenten

50g des rot lumineszierenden Pigments und 50g des grün lumineszierenden Pigments werden miteinander vermischt. Die Mischung luminesziert gelb.

### 2b) Druckfarbe aus Pulvermischung mit verschiedenen Lumineszenzpigmenten

Die Pulvermischung aus Ausführungsbeispiel 2a wird mit Hilfe eines Dreiwalzenstuhles in Offset-Drucklack (Sicpa Holding SA) eingearbeitet. Der Pigmentierungsgrad der Farbe beträgt dabei 15 Gewichtsprozent. Die erhaltene Offset-Druckfarbe luminesziert gelb.

Aufgrund der Gleichartigkeit der in der Mischung enthaltenen Pigmente gibt es keine Auftrennung der Pigmente während oder nach dem Farbherstellungsprozess.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat unter anderem anwendungstechnische Vorteile (schnellere Einarbeitung, kein Stauben bei der Einarbeitung, ...)

### 2c) Druckfarbe aus verschiedenen Druckfarben

Eine erste Druckfarbe wird mit dem rot lumineszierenden Pigment erstellt, indem dieses mit Hilfe eines Dreiwalzenstuhles in Offset-Drucklack (Sicpa Holding SA) eingearbeitet wird. Der Pigmentierungsgrad der Druckfarbe beträgt 15 Gewichtsprozent. Die Farbe luminesziert rot.

Eine zweite Druckfarbe wird mit dem grün lumineszierenden Pigment erstellt, indem dieses mit Hilfe eines Dreiwalzenstuhles in Offset-Drucklack (Sicpa Holding SA) eingearbeitet wird. Der Pigmentierungsgrad der Druckfarbe beträgt 15 Gewichtsprozent. Die Farbe luminesziert grün.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat u.a. anwendungstechnische Vorteile (schnellere Einarbeitung, kein Stauben bei der Einarbeitung, ...)

Durch Mischen gleicher Anteile der ersten und der zweiten Druckfarbe wird eine dritte Druckfarbe erstellt. Diese luminesziert gelb. Sie unterscheidet sich inhaltlich nicht von der Druckfarbe in Ausführungsbeispiel 2b. Aufgrund der Gleichartigkeit der in der ersten und zweiten Farbe verwendeten Pigmente verhalten sich diese in der Druckfarbe identisch und können ohne Inkompatibilitäten vermischt werden.

Somit ist es möglich, Mischfarben entweder aus Pulvermischungen (2b) oder aus den Grundfarben der reinen Pigmente (2c) zu erstellen.

### 2d) Wertdokument mit separatem Aufdruck aus zwei verschiedenen Lumineszenzpigmenten

Die rot lumineszierende Farbe und die grün lumineszierende Farbe aus Ausführungsbeispiel 2c werden jeweils auf verschiedene Stellen desselben Wertdokuments gedruckt. Die Andruckstärke beträgt dabei 2 g/m². Die Andrucke der beiden Farben bilden hierbei zwei nebeneinander auf dem Wertdokument aufgedruckte Streifen mit der jeweiligen Größe 2x4 cm², welche jeweils rot und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist in der nachfolgenden Tabelle dargestellt.

| Wollskala | Restintensität rot [%] | Restintensität grün [%] | Differenz [Prozentpunkte] |
|---|---|---|---|
| Anfangswert | 100 | 100 | 0 |
| 1 | 87 | 88 | 1 |
| 2 | 84 | 78 | 6 |
| 3 | 74 | 65 | 9 |

Die gedruckten Farben verlieren nach gleicher Lichteinwirkung in etwa die gleiche Menge an Lumineszenzintensität. Daher ändert sich das relative Verhältnis der Emissionsintensität bei beiden Farben für das Auge nicht. Das gesamte Sicherheitsmerkmal kann einheitlich erkannt werden und eine maschinelle Auswertung des konstanten Intensitätsverhältnisses der unterschiedlichen Emissionen ist möglich.

Weitere, derart bedruckte Wertdokumente werden gemäß Testverfahren A30 bzw. A5 auf ihre Chemikalienstabilität hin getestet.

| Testsubstanz | Restintensität rot [%] | Restintensität grün [%] | Differenz [Prozentpunkte] |
|---|---|---|---|
| Ethylacetat, 30 Minuten | 99 | 98 | 1 |
| Toluol, 30 Minuten | 99 | 97 | 2 |
| Salzsäure 5%, 30 Minuten | 97 | 99 | 2 |
| Natriumhydroxid 2%, 30 Minuten | 98 | 99 | 1 |
| Natriumhypochlorit, 5% aktives Chlor, 30 Minuten | 99 | 97 | 2 |
| Aceton, 5 Minuten | 99 | 98 | 1 |

Die Andrucke zeigen aufgrund der gleichartigen Chemikalienstabilität der Lumineszenzpigmente keine großen relativen Unterschiede in der verbleibenden Lumineszenzintensität. Daher ändert sich das relative Verhältnis der Emissionsintensität bei beiden Farben für das Auge nicht.

Das gesamte Sicherheitsmerkmal kann einheitlich erkannt werden und eine maschinelle Auswertung des konstanten Intensitätsverhältnisses der unterschiedlichen Emissionen ist möglich.

### 2e) Wertdokument mit Aufdruck einer Mischung aus zwei verschiedenen Lumineszenzpigmenten

Die gelb lumineszierende Mischfarbe aus Ausführungsbeispiel 2c wird auf ein Wertdokument gedruckt. Die Andruckstärke beträgt dabei 2 g/m². Der Andruck bildet hierbei ein auf dem Wertdokument aufgedrucktes Quadrat der Größe 4x4 cm², welches gelb luminesziert.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,4313; y=0,4681 | - |
| 1 | x=0,4308; y=0,4688 | 0,00086 |
| 2 | x=0,4345; y=0,4637 | 0,00544 |
| 3 | x=0,4370; y=0,4603 | 0,00966 |

Aufgrund der gleichartigen Lichtechtheit der beiden eingesetzten Pigmente ändert sich der Farbeindruck der Emission der Mischfarbe kaum. Ein Betrachter wird daher keine Änderung des Farbtons der Lumineszenz wahrnehmen, auch wenn das Wertdokument z.B. längerer Sonneneinstrahlung ausgesetzt wurde.

Das Sicherheitsmerkmal kann somit klar von einem Betrachter erkannt werden und eine maschinelle Auswertung des Spektrums bzw. des Normfarbwerts ist möglich.

Weitere derart bedruckte Wertdokumente werden gemäß Testverfahren A30 auf ihre Chemikalienstabilität hin getestet. Die Veränderung des Farbeindrucks der Emission (ΔD) relativ zum Wert vor der Chemikalienbehandlung des Andrucks ist in nachfolgender Tabelle dargestellt.

| Testsubstanz | Normfarbwerte Emission | ΔD |
|---|---|---|
| (vor Behandlung) | x=0,4313; y=0,4681 | - |
| Ethylacetat, 30 Minuten | x=0,4312; y=0,4680 | 0,00014 |
| Toluol, 30 Minuten | x=0,4314; y=0,4681 | 0,00010 |
| Salzsäure 5%, 30 Minuten | x=0,4313; y=0,4680 | 0,00010 |
| Natriumhydroxid 2%, 30 Minuten | x=0,4310; y=0,4680 | 0,00031 |
| Natriumhypochlorit, 5% aktives Chlor, 30 Minuten | x=0,4314; y=0,4681 | 0,00010 |

Die Andrucke zeigen aufgrund der gleichartigen Chemikalienstabilität der Lumineszenzpigmente, welche in der Mischung eingesetzt wurden, keine Verschiebung des Farbtons der Emission. Daher ändert sich der wahrgenommene Farbton der Lumineszenz des Andrucks auch nach Behandlung mit Lösemitteln für das Auge nicht.

Das Sicherheitsmerkmal kann somit klar von einem Betrachter erkannt werden und eine maschinelle Auswertung des Spektrums bzw. des Normfarbwerts ist möglich.

### 2f) Aufdruck mit Echtfarbenfluoreszenz

Zusätzlich zu der roten und grünen Farbe aus Ausführungsbeispiel 2c wird eine dritte, blau lumineszierende Druckfarbe hergestellt. Es handelt sich dabei um ein analog aufgebautes Pigment, welches relativ zur Kernmasse 5 Gewichtsprozent des Farbstoffs 4,4'-Bis(benzoxazol-2-yl)stilben (C₂₈H₁₈N₂O₂) enthält und analog in eine Offset-Druckfarbe eingearbeitet wurde.

Alle drei Farben lumineszieren bei UV-Bestrahlung mit 365 nm.

Mit den drei Farben wird ein Echtfarbenbild auf ein Wertdokument gedruckt, z.B. ein RGB-Farbkreis mit weißem Punkt in der Mitte. Durch Kombination der drei Grundfarben rot, grün und blau können dabei durch Überlagerung der Druckfarben beliebige Mischfarben oder Farbverläufe erzeugt werden. Durch die gleichartige Lichtechtheit und Chemikalienstabilität der einzelnen Grundfarben bleiben die Farbtöne der Mischfarben und Farbverläufe auch bei Sonnenbestrahlung oder Behandlung mit Lösemitteln in ihrem Farbton unverändert.

### Gegenbeispiel 2: Lumineszenzsystem aus roten und grünen Pigmenten ohne angepasste Stabilitäten

Als rot lumineszierendes Pigment wird das Polyharnstoff-Pigment verwendet, welches in Beispiel 4 der Patentanmeldung US 5795379 A beschrieben ist. Es ist ähnlich zum rot lumineszierenden Pigment des Ausführungsbeispiels 2 aufgebaut, besitzt jedoch keine zusätzliche Schutzhülle (und daher keine angepasste Chemikalienstabilität) und keine angepasste Farbstoffzusammensetzung (und daher keine angepasste Lichtechtheit).

Als grün lumineszierendes Pigment wird das gleiche Kapselpigment verwendet wie im Ausführungsbeispiel 2.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die beiden Pigmente werden analog zu den Schritten im Ausführungsbeispiel 2 in Druckfarben eingebracht und auf Wertdokumente gedruckt.

Gegenbeispiel zu "Wertdokument mit separatem Aufdruck aus zwei verschiedenen Lumineszenzpigmenten":
Auf ein Wertdokument werden analog zum Ausführungsbeispiel 2d zwei nebeneinander liegende Streifen mit der jeweiligen Größe 2x4 cm² gedruckt, welche jeweils rot und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist nachfolgender Tabelle dargestellt.

| Wollskala | Restintensität rot [%] | Restintensität grün [%] | Differenz [Prozentpunkte] |
|---|---|---|---|
| Anfangswert | 100 | 100 | 0 |
| 1 | 33 | 89 | 56 |
| 2 | 21 | 78 | 57 |
| 3 | 15 | 68 | 53 |

Die Andrucke der beiden Farben unterscheiden sich deutlich in ihrer Lichtechtheit und verlieren unterschiedlich große Anteile ihrer Lumineszenzintensität bei Bestrahlung mit Licht. Daher ändert sich das relative Verhältnis der Emissionsintensität der beiden Farben für einen Betrachter deutlich. Der rot lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

Weitere derart bedruckte Wertdokumente werden gemäß Testverfahren A30 bzw. A5 auf ihre Chemikalienstabilität hin getestet.

| Testsubstanz | Restintensität rot [%] | Restintensität grün [%] | Differenz [Prozentpunkte] |
|---|---|---|---|
| Ethylacetat, 30 Minuten | 43 | 99 | 56 |
| Toluol, 30 Minuten | 95 | 98 | 3 |
| Salzsäure 5%, 30 Minuten | 78 | 99 | 21 |
| Natriumhydroxid 2%, 30 Minuten | 79 | 98 | 19 |
| Natriumhypochlorit, 5% aktives Chlor, 30 Minuten | 72 | 97 | 25 |
| Aceton, 5 Minuten | 40 | 99 | 59 |

Die Andrucke der beiden Farben zeigen deutlich unterschiedliche Chemikalienstabilitäten. Daher ändert sich das relative Verhältnis der Emissionsintensität bei beiden Farben für das Auge deutlich. Der rot lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

### Gegenbeispiel zu "Wertdokument mit Aufdruck einer Mischung aus zwei verschiedenen Lumineszenzpigmenten"

Auf ein Wertdokument wird analog zum Ausführungsbeispiel 2e ein Quadrat der Größe 4x4 cm² gedruckt, welches gelb luminesziert, wobei die verwendete Druckfarbe eine Mischung des roten und des grünen Lumineszenzpigments des Gegenbeispiels 2 enthält.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,4035; y=0,5416 | - |
| 1 | x=0,3663; y=0,5714 | 0,04766 |
| 2 | x=0,3594; y=0,5769 | 0,05648 |
| 3 | x=0,3559; y=0,5797 | 0,06097 |

Die beiden in der Mischung eingesetzten Lumineszenzpigmente unterscheiden sich in ihren Lichtechtheiten, wodurch sich der Farbeindruck der Emission durch Bestrahlung mit Licht deutlich ändert.

Ein Betrachter wird daher eine klare Änderung des Farbtons der Lumineszenz von gelb nach grün wahrnehmen, wenn das Wertdokument z.B. längerer Sonneneinstrahlung ausgesetzt wurde.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

Weitere derart bedruckte Wertdokumente werden gemäß Testverfahren A30 auf ihre Chemikalienstabilität hin getestet.

| Testsubstanz | Normfarbwerte Emission | ΔD |
|---|---|---|
| (vor Behandlung) | x=0,4035; y=0,5416 | - |
| Ethylacetat, 30 Minuten | x=0,3705; y=0,5680 | 0,04226 |
| Toluol, 30 Minuten | x=0,4014; y=0,5433 | 0,00270 |
| Salzsäure 5%, 30 Minuten | x=0,3920; y=0,5508 | 0,01472 |
| Natriumhydroxid 2%, 30 Minuten | x=0,3930; y=0,5500 | 0,01344 |
| Natriumhypochlorit, 5% aktives Chlor, 30 Minuten | x=0,3894; y=0,5529 | 0,01806 |

Die Andrucke zeigen aufgrund der unterschiedlichen Chemikalienstabilität der in der Mischung eingesetzten Lumineszenzpigmente eine Verschiebung des Farbtons der Emission nach Behandlung mit bestimmten Lösemitteln. Daher ändert sich die wahrgenommene Lumineszenzfarbe des Andrucks nach Behandlung mit Lösemitteln für das Auge deutlich. Die Lumineszenz des Andrucks verschiebt sich von gelb nach grün.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

### Ausführungsbeispiel 3: Pigmentsystem aus blauen und grünen Kapsel-Lumineszenzpigmenten mit mehreren Thermoplast-Kernen und Additionsspolymer-Hülle

Als blau lumineszierendes Pigment wird ein Kern-Hülle-Teilchen mit mehreren Polymethylmethacrylat-Kernen und einer Polyharnstoff-Hülle verwendet, welches als in den Kernen gelösten Farbstoff 2,5-Thiophendiylbis(5-tert-butyl-1,3-benzoxazol) enthält.

Es entspricht einem Kapsel-Lumineszenzpigment gemäß der bevorzugten Variante 3.

### Herstellung des blauen Lumineszenzpigments:

50 g PMMA mit einem durchschnittlichen Molgewicht von 100000 g/mol werden mit 5 g 2,5-Thiophendiylbis(5-tert-butyl-1,3-benzoxazol) (C₂₆H₂₆N₂O₂S) in 1 Liter Chloroform gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Chloroform unter Rühren bei 500 mbar verdampft. Die verbleibende wässrige Phase enthält nach Entfernen des Chloroforms ca. 55 g Kugeln aus PMMA mit einer mittleren Partikelgröße von ca. 2 µm, welche den gelösten Farbstoff enthalten (im Folgenden "PMMA B" genannt). Mit einer Ultrazentrifuge werden die Partikel dreimal mit je 1 Liter Wasser gewaschen und bei 60°C anschließend getrocknet.

In einem Laborkneter werden die Komponenten
79.63 g des Isocyanurat-Trimeren von Isophorondiisocyanat
22.46 g Benzamid
2.00 g Harnstoff
14.12 g Melamin
10 g PMMA B
bei 180°C bis zum Erstarren geknetet. Das erhaltene Granulat wird auf eine Korngröße (d99) von 11 µm gemahlen.

Es werden ca. 50 g eines bei Bestrahlung mit UV-Licht der Wellenlänge 365 nm blau fluoreszierenden Pigments erhalten.

Als grün lumineszierendes Pigment wird ein Kern-Hülle-Teilchen mit mehreren Polymethylmethacrylat-Kernen und einer Polyharnstoff-Hülle verwendet, welches als in den Kernen gelösten Farbstoff N-(2-(4-oxo-4H-benzo [d] [1,3] oxazin-2-yl)phenyl)naphthalen-2-sulfonamid (C₂₄H₁₆N₂O₄S) enthält.

Es entspricht einem Kapsel-Lumineszenzpigment gemäß der bevorzugten Variante 3.

### Herstellung des grünen Lumineszenzpigments:

50 g PMMA mit einem durchschnittlichen Molgewicht von 100000 g/mol werden mit 5 g N-(2-(4-oxo-4H-benzo[d][1,3]oxazin-2-yl)phenyl)naphthalen-2-sulfonamid (C₂₄H₁₆N₂O₄S) in 1 Liter Dichlormethan gelöst. Die Mischung wird in einen Reaktor mit 5 Liter einer wässrigen Lösung von 1% Natriumdodecylsulfat gegeben und mit einem Homogenisator für 5 min dispergiert. Anschließend wird das Dichlormethan unter Rühren bei 500 mbar verdampft. Die verbleibende wässrige Phase enthält nach Entfernen des Dichlormethans ca. 55 g Kugeln aus PMMA mit einer mittleren Partikelgröße von ca. 2 µm, welche den gelösten Farbstoff enthalten (im Folgenden "PMMA G" genannt). Mit einer Ultrazentrifuge werden die Partikel dreimal mit je 1 Liter Wasser gewaschen und bei 60°C anschließend getrocknet.

In einem Laborkneter werden die Komponenten
79.63 g des Isocyanurat-Trimeren von Isophorondiisocyanat
22.46 g Benzamid
2.00 g Harnstoff
14.12 g Melamin
10 g PMMA G
bei 180°C bis zum Erstarren geknetet. Das erhaltene Granulat wird auf eine Korngröße (d99) von 11 µm gemahlen.

Es werden ca. 50 g eines bei Bestrahlung mit UV-Licht der Wellenlänge 365 nm grün fluoreszierenden Pigments erhalten.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

### 3a) Pulvermischung aus verschiedenen Lumineszenzpigmenten

50g des blau lumineszierenden Pigments und 50g des grün lumineszierenden Pigments werden miteinander vermischt. Die Mischung luminesziert cyan (blaugrün).

### 3b) Druckfarbe aus Pulvermischung mit verschiedenen Lumineszenzpigmenten

Die Pulvermischung aus Ausführungsbeispiel 3a wird mit Hilfe eines Dreiwalzenstuhles in Offset-Drucklack (hubergroup Deutschland GmbH) eingearbeitet. Der Pigmentierungsgrad der Farbe beträgt dabei 15 Gewichtsprozent. Die erhaltene Offset-Druckfarbe luminesziert cyan.

Aufgrund der Gleichartigkeit der in der Mischung enthaltenen Pigmente gibt es keine Auftrennung der Pigmente während oder nach dem Farbherstellungsprozess.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat unter anderem anwendungstechnische Vorteile (schnellere Einarbeitung, kein Stauben bei der Einarbeitung, ...)

### 3c) Druckfarbe aus verschiedenen Druckfarben

Eine erste Druckfarbe wird mit dem blau lumineszierenden Pigment erstellt, indem dieses mit Hilfe eines Dreiwalzenstuhles in Offset-Drucklack (hubergroup Deutschland GmbH) eingearbeitet wird. Der Pigmentierungsgrad der Druckfarbe beträgt 15 Gewichtsprozent. Die Farbe luminesziert blau.

Eine zweite Druckfarbe wird mit dem grün lumineszierenden Pigment erstellt, indem dieses mit Hilfe eines Dreiwalzenstuhles in Offset-Drucklack (hubergroup Deutschland GmbH) eingearbeitet wird. Der Pigmentierungsgrad der Druckfarbe beträgt 15 Gewichtsprozent. Die Farbe luminesziert grün.

Anstatt die Pigmente direkt in den Drucklack einzuarbeiten kann aus den Pigmenten auch zuerst ein Farbkonzentrat hergestellt werden (z.B. mit einem Pigmentanteil von 50%) und dann das Farbkonzentrat in den Drucklack eingearbeitet werden. Dies hat u.a. anwendungstechnische Vorteile (schnellere Einarbeitung, kein Stauben bei der Einarbeitung, ...)

Durch Mischen gleicher Anteile der ersten und der zweiten Druckfarbe wird eine dritte Druckfarbe erstellt. Diese luminesziert cyan. Sie unterscheidet sich inhaltlich nicht von der Druckfarbe in Ausführungsbeispiel 3b. Aufgrund der Gleichartigkeit der in der ersten und zweiten Farbe verwendeten Pigmente verhalten sich diese in der Druckfarbe identisch und können ohne Inkompatibilitäten vermischt werden.

Somit ist es möglich, Mischfarben entweder aus Pulvermischungen (3b) oder aus den Grundfarben der reinen Pigmente (3c) zu erstellen.

### 3d) Wertdokument mit separatem Aufdruck aus zwei verschiedenen Lumineszenzpigmenten

Die blau lumineszierende Farbe und die grün lumineszierende Farbe aus Ausführungsbeispiel 3c werden jeweils auf verschiedene Stellen desselben Wertdokuments gedruckt. Die Andruckstärke beträgt dabei 2 g/m². Die Andrucke der beiden Farben bilden hierbei zwei nebeneinander auf dem Wertdokument aufgedruckte Streifen mit der jeweiligen Größe 2x4 cm², welche jeweils blau und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist in der nachfolgenden Tabelle dargestellt.

| Wollskala | Restintensität blau [%] | Restintensität grün [%] | Differenz [Prozentpunkte] |
|---|---|---|---|
| Anfangswert | 100 | 100 | 0 |
| 1 | 82 | 87 | 5 |
| 2 | 76 | 79 | 3 |
| 3 | 65 | 66 | 1 |

Die gedruckten Farben verlieren nach gleicher Lichteinwirkung in etwa die gleiche Menge an Lumineszenzintensität. Daher ändert sich das relative Verhältnis der Emissionsintensität bei beiden Farben für das Auge nicht. Das gesamte Sicherheitsmerkmal kann einheitlich erkannt werden und eine maschinelle Auswertung des konstanten Intensitätsverhältnisses der unterschiedlichen Emissionen ist möglich.

Weitere, derart bedruckte Wertdokumente werden gemäß Testverfahren A30 bzw. A5 auf ihre Chemikalienstabilität hin getestet.

| Testsubstanz | Restintensität blau [%] | Restintensität grün [%] | Differenz [Prozentpunkte] |
|---|---|---|---|
| Ethylacetat, 30 Minuten | 85 | 83 | 2 |
| Toluol, 30 Minuten | 95 | 94 | 1 |
| Salzsäure 5%, 30 Minuten | 94 | 95 | 1 |
| Natriumhydroxid 2%, 30 Minuten | 86 | 84 | 2 |
| Natriumhypochlorit, 5% aktives Chlor, 30 Minuten | 91 | 92 | 1 |
| Aceton, 5 Minuten | 82 | 83 | 1 |

Die Andrucke zeigen aufgrund der gleichartigen Chemikalienstabilität der Lumineszenzpigmente keine großen relativen Unterschiede in der verbleibenden Lumineszenzintensität. Daher ändert sich das relative Verhältnis der Emissionsintensität bei beiden Farben für das Auge nicht.

Das gesamte Sicherheitsmerkmal kann einheitlich erkannt werden und eine maschinelle Auswertung des konstanten Intensitätsverhältnisses der unterschiedlichen Emissionen ist möglich.

### 3e) Wertdokument mit Aufdruck einer Mischung aus zwei verschiedenen Lumineszenzpigmenten

Die cyan lumineszierende Mischfarbe aus Ausführungsbeispiel 3c wird auf ein Wertdokument gedruckt. Die Andruckstärke beträgt dabei 2 g/m². Der Andruck bildet hierbei ein auf dem Wertdokument aufgedrucktes Quadrat der Größe 4x4 cm², welches cyan luminesziert.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,2151; y=0,2968 | - |
| 1 | x=0,2181; y=0,3038 | 0,00761 |
| 2 | x=0,2171; y=0,3014 | 0,00501 |
| 3 | x=0,2159; y=0,2986 | 0,00196 |

Aufgrund der gleichartigen Lichtechtheit der beiden eingesetzten Pigmente ändert sich der Farbeindruck der Emission der Mischfarbe kaum. Ein Betrachter wird daher keine Änderung des Farbtons der Lumineszenz wahrnehmen, auch wenn das Wertdokument z.B. längerer Sonneneinstrahlung ausgesetzt wurde.

Das Sicherheitsmerkmal kann somit klar von einem Betrachter erkannt werden und eine maschinelle Auswertung des Spektrums bzw. des Normfarbwerts ist möglich.

Weitere derart bedruckte Wertdokumente werden auf ihre Chemikalienstabilität hin getestet. Die Veränderung des Farbeindrucks der Emission (ΔD) relativ zum Wert vor der Chemikalienbehandlung des Andrucks ist in nachfolgender Tabelle dargestellt.

| Testsubstanz | Normfarbwerte Emission | ΔD |
|---|---|---|
| (vor Behandlung) | x=0,2151; y=0,2968 | - |
| Ethylacetat, 30 Minuten | x=0,2140; y=0,2940 | 0,00300 |
| Toluol, 30 Minuten | x=0,2146; y=0,2955 | 0,00170 |
| Salzsäure 5%, 30 Minuten | x=0,2145; y=0,2955 | 0,00139 |
| Natriumhydroxid 2%, 30 Minuten | x=0,2140; y=0,2940 | 0,00030 |
| Natriumhypochlorit, 5% aktives Chlor, 30 Minuten | x=0,2157; y=0,2981 | 0,00143 |

Die Andrucke zeigen aufgrund der gleichartigen Chemikalienstabilität der Lumineszenzpigmente, welche in der Mischung eingesetzt wurden, keine Verschiebung des Farbtons der Emission. Daher ändert sich der wahrgenommene Farbton der Lumineszenz des Andrucks auch nach Behandlung mit Lösemitteln für das Auge nicht.

Das Sicherheitsmerkmal kann somit klar von einem Betrachter erkannt werden und eine maschinelle Auswertung des Spektrums bzw. des Normfarbwerts ist möglich.

### 3f) Aufdruck mit Echtfarbenfluoreszenz

Zusätzlich zu der blauen und grünen Farbe aus Ausführungsbeispiel 3c wird eine dritte, rot lumineszierende Druckfarbe hergestellt. Es handelt sich dabei um ein analog aufgebautes Pigment, welches relativ zur Kernmasse gleichzeitig 5,5 Gewichtsprozent des Farbstoffs N-(2-(4-oxo-4H-benzo [d] [1,3] oxazin-2-yl)phenyl)naphthalen-2-sulfonamid (C₂₄H₁₆N₂O₄S), 0,35 Gewichtsprozent des Farbstoffs Eu(TTA)₃(TPPO)₂ und 0,35 Gewichtsprozent des Farbstoffs 2,9-Bis(2,6-diisopropylphenyl)-5,6,12,13-tetraphenoxyanthra[2,1,9-def:6,5,10-d'e'f']diisochinolin-1,3,8,10(2H,9H)-tetraon (C₇₂H₅₈N₂O₈) enthält und analog in eine Offset-Druckfarbe eingearbeitet wurde.

Alle drei Farben lumineszieren bei UV-Bestrahlung mit 365 nm.

Mit den drei Farben wird ein Echtfarbenbild auf ein Wertdokument gedruckt, z.B. ein RGB-Farbkreis mit weißem Punkt in der Mitte. Durch Kombination der drei Grundfarben rot, grün und blau können dabei durch Überlagerung der Druckfarben beliebige Mischfarben oder Farbverläufe erzeugt werden. Durch die gleichartige Lichtechtheit und Chemikalienstabilität der einzelnen Grundfarben bleiben die Farbtöne der Mischfarben und Farbverläufe auch bei Sonnenbestrahlung oder Behandlung mit Lösemitteln in ihrem Farbton unverändert.

### Gegenbeispiel 3: Lumineszenzsystem aus blauen und grünen Pigmenten ohne angepasste Stabilitäten

Als blau lumineszierendes Pigment wird ein mit 4,4'-Bis(2-methoxystyryl)-1,1'-biphenyl (C₃₀H₂₆O₂) beladenes PMMA-Partikel ohne zusätzliche Additionspolymer-Hülle verwendet. Es ist ähnlich zum blau lumineszierenden Pigment des Ausführungsbeispiels 3 aufgebaut, besitzt jedoch keine zusätzliche Schutzhülle (und daher keine angepasste Chemikalienstabilität) und keine angepasste Farbstoffzusammensetzung (und daher keine angepasste Lichtechtheit).

Als grün lumineszierendes Pigment wird das gleiche Kapselpigment verwendet wie im Ausführungsbeispiel 3.

Beide Pigmente lumineszieren unter UV-Anregung mit 365 nm. Wird im Folgenden davon gesprochen, dass diese Pigmente oder davon abgeleitete Farben bzw. Andrucke "lumineszieren", so ist damit gemeint, dass sie unter UV-Anregung bei 365 nm lumineszieren.

Die beiden Pigmente werden analog zu den Schritten im Ausführungsbeispiel 3 in Druckfarben eingebracht und auf Wertdokumente gedruckt.

Gegenbeispiel zu "Wertdokument mit separatem Aufdruck aus zwei verschiedenen Lumineszenzpigmenten":
Auf ein Wertdokument werden analog zum Ausführungsbeispiel 3d zwei nebeneinander liegende Streifen mit der jeweiligen Größe 2x4 cm² gedruckt, welche jeweils blau und grün lumineszieren.

Die jeweilige Fluoreszenzintensität der beiden Andrucke wird quantitativ mit Hilfe eines Fluoreszenzspektrometers gemessen und auf 100% normiert. Das Wertdokument wird anschließend einem Wollskalatest analog EN ISO 105-B01:1999 in einer Q-Lab Xenon-Testkammer (Q-SUN Xe-2-H) unterzogen. Die verbleibende Restintensität nach Erreichen der Wollskalenpunkte ist nachfolgender Tabelle dargestellt.

| Wollskala | Restintensität blau [%] | Restintensität grün [%] | Differenz [Prozentpunkte] |
|---|---|---|---|
| Anfangswert | 100 | 100 | 0 |
| 1 | 66 | 87 | 21 |
| 2 | 42 | 78 | 46 |
| 3 | 19 | 66 | 47 |

Die Andrucke der beiden Farben unterscheiden sich deutlich in ihrer Lichtechtheit und verlieren unterschiedlich große Anteile ihrer Lumineszenzintensität bei Bestrahlung mit Licht. Daher ändert sich das relative Verhältnis der Emissionsintensität der beiden Farben für einen Betrachter deutlich. Der blau lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

Weitere derart bedruckte Wertdokumente werden gemäß Testverfahren A30 bzw. A5 auf ihre Chemikalienstabilität hin getestet.

| Testsubstanz | Restintensität blau [%] | Restintensität grün [%] | Differenz [Prozentpunkte] |
|---|---|---|---|
| Ethylacetat, 30 Minuten | 3 | 82 | 79 |
| Toluol, 30 Minuten | 1 | 94 | 93 |
| Salzsäure 5%, 30 Minuten | 71 | 95 | 24 |
| Natriumhydroxid 2%, 30 Minuten | 67 | 83 | 16 |
| Natriumhypochlorit, 5% aktives Chlor, 30 Minuten | 51 | 91 | 40 |
| Aceton, 5 Minuten | 2 | 83 | 81 |

Die Andrucke der beiden Farben zeigen deutlich unterschiedliche Chemikalienstabilitäten. Daher ändert sich das relative Verhältnis der Emissionsintensität bei beiden Farben für das Auge deutlich. Der blau lumineszierende Teil des Andrucks wird deutlich schwächer bzw. verschwindet, während der grün lumineszierende Teil des Andrucks noch stark luminesziert.

Die Andrucke sind somit als visuelles Sicherheitsmerkmal nicht geeignet (kein eindeutiges und einheitliches Erkennen des Sicherheitsmerkmals durch den Betrachter) und auch als maschinell auslesbares Sicherheitsmerkmal nicht geeignet (kein detektierbares konstantes Intensitätsverhältnis zwischen den jeweiligen Intensitäten).

Gegenbeispiel zu "Wertdokument mit Aufdruck einer Mischung aus zwei verschiedenen Lumineszenzpigmenten"

Auf ein Wertdokument wird analog zum Ausführungsbeispiel 3e ein Quadrat der Größe 4x4 cm² gedruckt, welches cyan luminesziert, wobei die verwendete Druckfarbe eine Mischung des blauen und des grünen Lumineszenzpigments des Gegenbeispiels 3 enthält.

Die Fluoreszenzintensität des Andrucks wird quantitativ mit Hilfe eines Fluoreszenzspektrometers gemessen und der Normfarbwert der gemessenen Lumineszenzemission berechnet. Das Wertdokument wird anschließend einem Wollskalatest analog EN ISO 105-B01:1999 in einer Q-Lab Xenon-Testkammer (Q-SUN Xe-2-H) unterzogen. Die Veränderung des Farbeindrucks der Emission (ΔD) relativ zum Anfangswert nach Erreichen der Wollskalenpunkte ist in der nachfolgenden Tabelle dargestellt.

| Wollskala | Normfarbwerte Emission | ΔD |
|---|---|---|
| Anfangswert | x=0,2151; y=0,2968 | - |
| 1 | x=0,2292; y=0,3302 | 0,03625 |
| 2 | x=0,2468; y=0,3723 | 0,08188 |
| 3 | x=0,2769; y=0,4440 | 0,15964 |

Die beiden in der Mischung eingesetzten Lumineszenzpigmente unterscheiden sich in ihren Lichtechtheiten, wodurch sich der Farbeindruck der Emission durch Bestrahlung mit Licht deutlich ändert.

Ein Betrachter wird daher eine klare Änderung des Farbtons der Lumineszenz von cyan nach grün wahrnehmen, wenn das Wertdokument z.B. längerer Sonneneinstrahlung ausgesetzt wurde.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

Weitere derart bedruckte Wertdokumente werden gemäß Testverfahren A30 auf ihre Chemikalienstabilität hin getestet.

| Testsubstanz | Normfarbwerte Emission | ΔD |
|---|---|---|
| (vor Behandlung) | x=0,2151; y=0,2968 | - |
| Ethylacetat, 30 Minuten | x=0,3286; y=0,5673 | 0,29334 |
| Toluol, 30 Minuten | x=0,3361; y=0,5852 | 0,31275 |
| Salzsäure 5%, 30 Minuten | x=0,2299; y=0,3320 | 0,03818 |
| Natriumhydroxid 2%, 30 Minuten | x=0,2260; y=0,3226 | 0,02800 |
| Natriumhypochlorit, 5% aktives Chlor, 30 Minuten | x=0,2448; y=0,3674 | 0,07659 |

Die Andrucke zeigen aufgrund der unterschiedlichen Chemikalienstabilität der in der Mischung eingesetzten Lumineszenzpigmente eine Verschiebung des Farbtons der Emission nach Behandlung mit bestimmten Lösemitteln. Daher ändert sich die wahrgenommene Lumineszenzfarbe des Andrucks nach Behandlung mit Lösemitteln für das Auge deutlich. Die Lumineszenz des Andrucks verschiebt sich von cyan nach grün.

Die Andrucke sind somit als visuelles Sicherheitsmerkmal nicht geeignet (wechselnder Farbeindruck) und auch als maschinell auslesbares Sicherheitsmerkmal nicht geeignet (kein detektierbares konstantes Emissionsspektrum bzw. kein konstanter Normfarbwert)

## Patentansprüche

1. Pigmentsystem mit mindestens zwei Kapsel-Lumineszenzpigment-Sorten, die unterschiedliche Emissionsspektren der Lumineszenzemission aufweisen und die jeweils zumindest einen Kern mit einem Lumineszenzstoff und eine den zumindest einen Kern verkapselnde Hülle aufweisen,
wobei die Lumineszenzstoffe jeweils organische oder metallorganische Lumineszenzstoffe sind,
wobei das Material der Hülle gewählt ist aus Aminoplasten, Phenoplasten, Melamin-Formaldehyd-Harzen (MF), Melamin-Phenol-Formaldehyd-Harzen (MPF), Phenol-Formaldehyd-Harzen (PF), Harnstoff-Formaldehyd-Harzen (UF), Melamin-GuanidinFormaldehyd-Harzen oder Phenol-Resorcin-Formaldehyd-Harzen,
oder wobei die Kapsel-Lumineszenzpigmente umfassen:
- eine Duromer-Matrix, sowie
- eine Mehrzahl von darin eingebetteten Kernpartikeln aus einem thermoplastischen Polymer,
wobei für jede der mindestens zwei Kapsel-Lumineszenzpigment-Sorten das Material des zumindest einen Kerns, das Material der Hülle und die Dicke der Hülle so aufeinander abgestimmt sind, dass die zumindest zwei Kapsel-Lumineszenzpigment-Sorten eine im Wesentlichen gleiche chemische Stabilität gegen organische Lösungsmittel, wässrige Säuren, wässrige Basen und wässrige Redox-aktive Lösungen aufweisen,
wobei das Material der Hülle für jede der mindestens zwei Kapsel-Lumineszenzpigment-Sorten gleich ist und
wobei der Unterschied zwischen den auf den Startwert normierten Lumineszenzintensitäten der Kapsel-Lumineszenzpigment-Sorten untereinander weniger als 20 Prozentpunkte beträgt.

2. Pigmentsystem nach Anspruch 1, wobei für jede Kapsel-Lumineszenzpigment-Sorte das Material der Hülle der Kapsel-Lumineszenzpigmente aus einem Kondensationspolymer gewählt ist.

3. Pigmentsystem nach einem der Ansprüche 1 oder 2, wobei die zumindest zwei Kapsel-Lumineszenzpigment-Sorten eine im Wesentlichen gleiche chemische Stabilität bei einer Exposition für 5 Minuten gegen Toluol, Ethylacetat, Salzsäure (5%), Natronlauge (2%) und Natriumhypochlorit-Lösung (5% aktives Chlor) aufweisen, wobei die nach dem Test verbleibende Lumineszenzintensität höher ist als 80% der Anfangsintensität.

4. Pigmentsystem nach einem der Ansprüche 1 bis 3, wobei die zumindest zwei Kapsel-Lumineszenzpigment-Sorten unterschiedliche Farbeindrücke der Lumineszenzemission aufweisen.

5. Pigmentsystem nach einem der Ansprüche 1 bis 4, wobei mindestens eine Kapsel-Lumineszenzpigment-Sorte mit UVA-Strahlung anregbar sind.

6. Pigmentsystem nach einem der Ansprüche 1 bis 5, wobei mindestens eine Kapsel-Lumineszenzpigment-Sorte mit UVC-Strahlung anregbar sind.

7. Pigmentsystem nach einem der Ansprüche 1 bis 6, wobei in mindestens einer Kapsel-Lumineszenzpigment-Sorte zwei unterschiedliche Lumineszenzstoffe in fein verteilter oder gelöster Form vorliegen, die ein Energietransfersystem bilden, bei dem der erste Lumineszenzstoff nach Anregung seine Anregungsenergie partiell oder vollständig an den zweiten Lumineszenzstoff transferiert.

8. Pigmentsystem nach einem der Ansprüche 1 bis 7, wobei die unterschiedlichen Kapsel-Lumineszenzpigment-Sorten die im Wesentlichen gleiche chemische Stabilität gegen Aceton nach dem folgenden Testverfahren A5 aufweisen, wobei die nach dem Test verbleibende Lumineszenzintensität höher ist als 80% der Anfangsintensität:
- Einbringen der Kapsel-Lumineszenzpigmente in einen Offset-Lack mit einer Pigmentierung von 15 Gewichtsprozent mit einem Dreiwalzenstuhl;
- Andrucken der so erhaltenen Druckfarbe im Offsetdruck mit einem Andruckgewicht von 2 g/m² auf Werttitelpapier bzw. Banknotenpapier;
- Trocknen des Andrucks bei 60°C für 12h;
- Eintauchen des Andrucks bzw. eines abgeschnittenen Teils des Andrucks in die jeweilige Testsubstanz, gegen welche die Stabilität des Andrucks ermittelt werden soll, für einen Zeitraum von 5 Minuten;
- Entfernen des Andrucks aus der Testsubstanz und Abwaschen von anhaftender Testsubstanz mit Wasser;
- Trocknen des Andrucks bei 60°C für 2h;
- die quantitative Stabilität des Andrucks gegen die Testsubstanz ergibt sich aus dem Vergleich der Intensität der Lumineszenzemission des Andrucks vor und nach Behandlung mit der Testsubstanz bzw. dem Vergleich eines unbehandelten Teils des Andrucks mit einem behandelten Teil des gleichen Andrucks; Stabilität = (Intensität nach Behandlung mit Lösemittel) / (Intensität vor Behandlung mit Lösemittel).

9. Pigmentsystem nach einem der Ansprüche 1 bis 8, wobei die unterschiedlichen Kapsel-Lumineszenzpigment-Sorten die im Wesentlichen gleiche Lichtechtheit haben, wobei die Lichtechtheit dabei über die zur Lichtechtheitsbestimmung von Absorptionsfarben übliche Europäische Blau-Wollskala bestimmt wird, nämlich analog zur Norm EN ISO 105-B01:1999, wobei jedoch statt des (absorptiven) Farbeindrucks die Intensität der Lumineszenzemission an den verschiedenen Punkten der Wollskala bestimmt wird, wobei ein Punkt der Wollskala dabei als erreicht gilt, wenn nach Behandlung noch mehr als 50% der ursprünglichen Lumineszenzintensität gemessen werden können.

10. Pigmentsystem nach einem der Ansprüche 1 bis 9, wobei sich der Farbeindruck der Lumineszenzemission von beliebigen Mischungen der Kapsel-Lumineszenzpigmente nach UV-Bestrahlung gemäß dem folgenden Testverfahren B bei Wollskala 1 um weniger als ΔD < 0,03 verschiebt:
- Einbringen der Kapsel-Lumineszenzpigmente in einen Offset-Lack mit einer Pigmentierung von 15 Gewichtsprozent mit einem Dreiwalzenstuhl;
- Andrucken der so erhaltenen Druckfarbe im Offsetdruck mit einem Andruckgewicht von 2 g/m² auf Werttitelpapier bzw. Banknotenpapier;
- Trocknen des Andrucks bei 60°C für 12h;
- Einsetzen des Andrucks in eine Xenon-Lichttestkammer, oder äquivalentes Lichtechtheits-Bestimmungsgerät, und Bestrahlung gemäß der Europäischen Blau-Wollskala für die gewünschte Wollskala-Stufe;
- die quantitative Lichtechtheit des Andrucks ergibt sich aus dem Vergleich der Intensität der Lumineszenzemission des Andrucks vor und nach Behandlung bzw. dem Vergleich eines unbehandelten Teils des Andrucks mit einem behandelten Teil des gleichen Andrucks; Normierte Intensität bei Wollskala-Stufe = (Intensität bei Wollskala-Stufe) / (Intensität vor Behandlung).

11. Pigmentsystem nach Anspruch 9 oder 10, wobei die Lichtechtheit mindestens einer Kapsel-Lumineszenzpigment-Sorte durch eine Mischung unterschiedlich lichtechter Lumineszenzfarbstoffe erhalten wird.

12. Pigmentsystem nach einem der Ansprüche 9 bis 11, wobei ein Gemisch aus zwei Kapsel-Lumineszenzpigment-Sorten mit im Wesentlichen gleichem Farbeindruck, jedoch unterschiedlichen Lichtechtheiten in Summe die im Wesentlichen gleiche Lichtechtheit aufweist wie eine dritte Kapsel-Lumineszenzpigment-Sorte mit unterschiedlichem Farbeindruck der Lumineszenzemission.

13. Pigmentsystem nach einem der Ansprüche 1 bis 12, das mindestens 3 Kapsel-Lumineszenzpigment-Sorten mit unterschiedlichem Farbeindruck umfasst.

14. Farbkonzentrat-Satz mit mindestens zwei Farbkonzentraten mit einem Pigmentsystem nach einem der Ansprüche 1 bis 13.

15. Druckfarben-Satz mit mindestens zwei Druckfarben mit einem Pigmentsystem nach einem der Ansprüche 1 bis 13.

16. Druckfarbe mit einem Pigmentgemisch aus dem Pigmentsystem nach einem der Ansprüche 1 bis 13 oder mit einem Gemisch aus Farbkonzentraten aus dem Farbkonzentrat-Satz nach Anspruch 14 oder mit einem Gemisch aus Druckfarben aus dem Druckfarben-Satz nach Anspruch 15.

17. Polymermasse mit einem Pigmentsystem nach einem der Ansprüche 1 bis 13.

18. Wertdokument, Melierfaser, Sicherheitsfaden oder Sicherheitsfolie mit einem Pigmentsystem nach einem der Ansprüche 1 bis 13.

19. Wertdokument, Melierfaser, Sicherheitsfaden oder Sicherheitsfolie nach Anspruch 18, wobei die verschiedenen Kapsel-Lumineszenzpigment-Sorten entweder gemeinsam in einer Mischfarbe an einem Ort oder jeweils separat an unterschiedlichen Orten aufgedruckt sind.

20. Wertdokument oder Sicherheitsfolie nach Anspruch 18 oder 19, wobei die verschiedenen Kapsel-Lumineszenzpigment-Sorten ein lumineszierendes Echtfarbenbild bilden.

## Claims

1. Pigment system with at least two capsular luminescent pigment types which have different emission spectra of the luminescent emission and which each have at least one core with a luminescent substance and a shell encapsulating the at least one core,
wherein the luminescent substances are each organic or organometallic luminescent substances,
wherein the material of the shell is chosen from amino resins, phenolic resins, melamine-formaldehyde resins (MF), melamine-phenol-formaldehyde resins (MPF), phenol-formaldehyde resins (PF), urea-formaldehyde resins (UF), melamine-guanidine-formaldehyde resins or phenol-resorcinol-formaldehyde resins,
or wherein the capsular luminescent pigments comprise:
- a thermoset matrix, and
- a plurality of core particles embedded therein and composed of a thermoplastic polymer,
wherein for each of the at least two capsular luminescent pigment types, the material of the at least one core, the material of the shell and the thickness of the shell are coordinated such that the at least two capsular luminescent pigment types exhibit substantially the same chemical stability towards organic solvents, aqueous acids, aqueous bases and aqueous redox-active solutions, wherein the material of the shell is the same for each of the at least two capsular luminescent pigment types, and
wherein the difference between the luminescent intensities of the capsular luminescent pigment types among one another, normalized to the starting value, is less than 20 percentage points.

2. Pigment system according to Claim 1, wherein for each capsular luminescent pigment type, the material of the shell of the capsular luminescent pigments is chosen from a condensation polymer.

3. Pigment system according to either of Claims 1 and 2, wherein the at least two capsular luminescent pigment types exhibit substantially the same chemical stability on exposure for 5 minutes to toluene, ethyl acetate, hydrochloric acid (5%), sodium hydroxide solution (2%) and sodium hypochlorite solution (5% active chlorine), the luminescent intensity remaining after the test being higher than 80% of the initial intensity.

4. Pigment system according to any of Claims 1 to 3, wherein the at least two capsular luminescent pigment types exhibit different perceived colours of the luminescent emission.

5. Pigment system according to any of Claims 1 to 4, wherein at least one capsular luminescent pigment type is excitable with UVA radiation.

6. Pigment system according to any of Claims 1 to 5, wherein at least one capsular luminescent pigment type is excitable with UVC radiation.

7. Pigment system according to any of Claims 1 to 6, wherein two different luminescent substances are present in finely divided or dissolved form in at least one capsular luminescent pigment type and form an energy transfer system in which the first luminescent substance after excitation transfers its excitation energy partially or completely to the second luminescent substance.

8. Pigment system according to any of Claims 1 to 7, wherein the different capsular luminescent pigment types exhibit substantially the same chemical stability to acetone according to test method A5 below, the luminescent intensity remaining after the test being higher than 80% of the initial intensity:
- introducing the capsular luminescent pigments into an offset varnish with a pigmentation of 15 per cent by weight using a triple-roll mill;
- printing the resultant printing ink by offset printing with an ink weight per unit area of 2 g/m² onto security paper or banknote paper;
- drying the printed proof at 60°C for 12 h;
- immersing the proof or an excised part of the proof into the respective test substance to which the stability of the print is to be ascertained, for a period of 5 minutes;
- removing the proof from the test substance and washing off adhering test substance with water;
- drying the proof at 60°C for 2h;
- the quantitative stability of the proof to the test substance is obtained by comparing the intensity of the luminescent emission of the proof before and after treatment with the test substance or by comparing an untreated part of the proof with a treated part of the same proof; stability = (intensity after solvent treatment)/(intensity before solvent treatment).

9. Pigment system according to any of Claims 1 to 8, wherein the different capsular luminescent pigment types have substantially the same light fastness, the light fastness here being determined via the European blue wool scale customary for determining the light fastness of absorption colours, namely in analogy to the standard EN ISO 105-B01:1999, but determining the intensity of the luminescent emission at the various points on the wool scale instead of the (absorptive) perceived colour, a point on the wool scale here being deemed to have been reached if, after treatment, it is still possible to measure more than 50% of the original luminescent intensity.

10. Pigment system according to any of Claims 1 to 9, wherein the perceived colour of the luminescent emission of arbitrary mixtures of the capsular luminescent pigments, after UV irradiation in accordance with test method B below at wool scale 1, shifts by less than ΔD < 0.03:
- introducing the capsular luminescent pigments into an offset varnish with a pigmentation of 15 per cent by weight using a triple-roll mill;
- printing the resultant printing ink by offset printing with an ink weight per unit area of 2 g/m² onto security paper or banknote paper;
- drying the printed proof at 60°C for 12 h;
- inserting the proof into a xenon light test chamber, or equivalent light fastness determination instrument, and irradiating according to the European blue wool scale for the desired wool scale stage;
- the quantitative light fastness of the proof is obtained by comparing the intensity of the luminescent emission of the proof before and after treatment or by comparing an untreated part of the proof with a treated part of the same proof; normalized intensity at wool scale stage = (intensity at wool scale stage)/(intensity before treatment).

11. Pigment system according to Claim 9 or 10, wherein the light fastness of at least one capsular luminescent pigment type is obtained by a mixture of luminescent dyes having different light fastnesses.

12. Pigment system according to any of Claims 9 to 11, wherein a mixture of two capsular luminescent pigment types having substantially the same perceived colour but different light fastnesses has in total substantially the same light fastness as a third capsular luminescent pigment type with a different perceived colour of the luminescent emission.

13. Pigment system according to any of Claims 1 to 12, comprising at least 3 capsular luminescent pigment types with different perceived colours.

14. Ink concentrate set with at least two ink concentrates having a pigment system according to any of Claims 1 to 13.

15. Printing ink set with at least two printing inks having a pigment system according to any of Claims 1 to 13.

16. Printing ink with a pigment mixture comprising the pigment system according to any of Claims 1 to 13 or with a mixture of ink concentrates comprising the ink concentrate set according to Claim 14 or with a mixture of printing inks comprising the printing ink set according to Claim 15.

17. Polymer composition having a pigment system according to any of Claims 1 to 13.

18. Document of value, mottled fibre, security thread or security film having a pigment system according to any of Claims 1 to 13.

19. Document of value, mottled fibre, security thread or security film according to Claim 18, wherein the different capsular luminescent pigment types are printed either jointly in a mixed ink at one site or each separately at different sites.

20. Document of value or security film according to Claim 18 or 19, wherein the different capsular luminescent pigment types form a luminescent true-colour image.

## Revendications

1. Système pigmentaire ayant au moins deux sortes de pigments luminescents encapsulés, qui présentent des spectres d'émission de luminescence différents, et dont chacun comprend au moins un coeur ayant une substance luminescente et une écorce encapsulant l'au moins un coeur,
les substances luminescentes étant chacune des substances luminescentes organiques ou organométalliques,
le matériau de l'écorce étant choisi parmi les aminoplastes, les phénoplastes, les résines de mélamine-formaldéhyde (MF), les résines de mélaminephénol-formaldéhyde (MPF), les résines de phénolformaldéhyde (PF), les résines d'urée-formaldéhyde (UF), les résines de mélamine-guanidineformaldéhyde ou les résines de phénol-résorcinol-formaldéhyde,
ou les pigments luminescents encapsulés comprenant :
- une matrice thermoplastique, ainsi que
- un grand nombre de particules de coeur qui y sont noyées, en un polymère thermoplastique,
pour chacune des au moins deux sortes de pigments luminescents encapsulés, le matériau de l'au moins un coeur, le matériau de l'écorce et l'épaisseur de l'écorce étant adaptés les uns aux autres de façon qu'au moins deux sortes de pigments luminescents encapsulés présentent pour l'essentiel la même stabilité chimique aux solvants organiques, aux acides aqueux, aux bases aqueuses et aux solutions aqueuses à activité redox,
le matériau de l'écorce étant le même pour chacune des au moins deux sortes de pigments luminescents encapsulés, et
la différence entre les intensités de luminescence, normées à la valeur de départ, des sortes de pigments luminescents encapsulés, étant inférieure à 20 points de pourcentage.

2. Système pigmentaire selon la revendication 1, dans lequel pour chaque sorte de pigment luminescent encapsulé, le matériau de l'écorce des pigments luminescents encapsulés est choisi parmi un polymère de condensation.

3. Système pigmentaire selon l'une des revendications 1 ou 2, dans lequel les au moins deux sortes de pigments luminescents encapsulés présentent une stabilité chimique pour l'essentiel identique, pour une exposition pendant 5 minutes, au toluène, à l'acétate d'éthyle, à l'acide chlorhydrique (5 %), à la soude caustique (2 %) et à une solution d'hypochlorite de sodium (5 % de chlore actif), l'intensité de luminescence restant après l'essai étant supérieure à 80 % de l'intensité de départ.

4. Système pigmentaire selon l'une des revendications 1 à 3, dans lequel les au moins deux sortes de pigments luminescents encapsulés présentent des impressions colorées différentes de l'émission de luminescence.

5. Système pigmentaire selon l'une des revendications 1 à 4, dans lequel au moins une sorte de pigment luminescent encapsulé peut être excitée par un rayonnement UVA.

6. Système pigmentaire selon l'une des revendications 1 à 5, dans lequel au moins une sorte de pigment luminescent encapsulé peut être excité par un rayonnement UVC.

7. Système pigmentaire selon l'une des revendications 1 à 6, dans lequel, dans au moins une sorte de pigment luminescent encapsulé, on a présentes deux substances luminescentes différentes sous une forme finement divisée ou dissoute, qui forment un système de transfert d'énergie, dans lequel la première substance luminescente transfère en totalité ou en partie son énergie d'excitation à la deuxième substance luminescente après l'excitation.

8. Système pigmentaire selon l'une des revendications 1 à 7, dans lequel les différentes sortes de pigments luminescents encapsulés présentent la stabilité chimique à la cétone pour l'essentiel identique après l'essai A5 ci-après, dans lequel l'intensité de luminescence restant après le test étant supérieure à 80 % de l'intensité de départ,
- introduction des pigments luminescents encapsulés dans un vernis offset avec une pigmentation de 15 pour cent en poids, à l'aide d'un broyeur à trois cylindres ;
- tirage d'une épreuve avec l'encre d'imprimerie ainsi obtenue en impression offset pour un poids d'impression de 2 g/m² sur un papier pour titres financiers ou sur un papier pour billets de banque ;
- séchage de l'épreuve à 60 °C pendant 12 heures ;
- immersion de l'épreuve ou d'une partie découpée de l'épreuve dans la substance d'essai considérée, vis-à-vis de laquelle il s'agit de déterminer la stabilité de l'épreuve, pendant une durée de 5 minutes ;
- extraction de l'épreuve de la substance d'essai et lavage à l'eau de la substance d'essai adhérente ;
- séchage de l'épreuve à 60 °C pendant 2 heures ;
- la stabilité quantitative de l'épreuve à la substance d'essai est obtenue à partir de la comparaison de l'intensité de l'émission de luminescence de l'épreuve avant et après traitement avec la substance d'essai, ou par comparaison d'une partie non traitée de l'épreuve à une partie traitée de la même épreuve ; stabilité = (intensité après traitement avec le solvant)/(intensité avant traitement avec le solvant).

9. Système pigmentaire selon l'une des revendications 1 à 8, dans lequel les différentes sortes de pigments luminescents encapsulés ont pour l'essentiel la même résistance à la lumière, la résistance à la lumière étant alors déterminée par l'échelle européenne de laine bleue, usuelle pour la détermination de la résistance à la lumière d'encres d'absorption, d'une manière analogue à la norme EN ISO 105-B01:1999, mais dans lequel toutefois, au lieu de l'impression colorée (par absorption), on détermine l'intensité de l'émission de luminescence en les différents points de l'échelle de laine, un point de l'échelle de laine étant atteint quand, après le traitement, on peut encore mesurer plus de 50 % de l'intensité de luminescence initiale.

10. Système pigmentaire selon l'une des revendications 1 à 9, dans lequel l'impression colorée de l'émission de luminescence de mélanges quelconques des pigments luminescents encapsulés se décale de moins de ΔD < 0,03 après irradiation UV selon le test suivant B, pour l'échelle de laine 1 :
- introduction des pigments luminescents encapsulés dans un vernis offset, avec une pigmentation de 15 pour cent en poids, à l'aide d'un broyeur à trois cylindres ;
- tirage d'une épreuve de l'encre d'imprimerie ainsi obtenue en impression offset, pour un poids d'impression de 2 g/m² sur un papier pour titres financiers ou sur un papier pour billets de banque ;
- séchage de l'épreuve à 60 °C pendant 12 heures ;
- mise en place de l'épreuve dans une chambre d'essai à la lumière xénon, ou dans un dispositif équivalent de détermination de la résistance à la lumière, et irradiation selon l'échelle européenne de laine bleue pour la valeur souhaitée de l'échelle de laine ;
- la résistance quantitative à la lumière de l'épreuve est obtenue par la comparaison de l'intensité de l'émission de luminescence de l'épreuve avant et après traitement, ou comparaison d'une partie non traitée de l'épreuve à une partie traitée de la même épreuve ; intensité normée pour la valeur de l'échelle de laine = (intensité pour la valeur de l'échelle de laine)/(intensité avant traitement).

11. Système pigmentaire selon la revendication 9 ou 10, dans lequel la résistance à la lumière d'au moins une sorte de pigment luminescent encapsulé est obtenue par un mélange de différentes substances luminescentes résistantes à la lumière.

12. Système pigmentaire selon l'une des revendications 9 à 11, dans lequel un mélange de deux sortes de pigments luminescents encapsulés ayant pour l'essentiel la même impression colorée mais présentant des résistances totales à la lumière différentes, présente pour l'essentiel la même résistance à la lumière qu'une troisième sorte de pigment luminescent encapsulé, ayant une impression colorée différente de l'émission de luminescence.

13. Système pigmentaire selon l'une des revendications 1 à 12, qui comprend au moins 3 sortes de pigments luminescents encapsulés ayant différentes impressions colorées.

14. Jeu de concentrés colorés ayant au moins deux concentrés colorés comportant un système pigmentaire selon l'une des revendications 1 à 13.

15. Jeu d'encres d'imprimerie comportant au moins deux encres d'imprimerie avec un système pigmentaire selon l'une des revendications 1 à 13.

16. Encre d'imprimerie comportant un mélange pigmentaire constitué du système pigmentaire selon l'une des revendications 1 à 13, ou un mélange de concentrés colorés provenant d'un jeu de concentrés colorés selon la revendication 14, ou un mélange d'encres d'imprimerie du jeu d'encres d'imprimerie selon la revendication 15.

17. Masse polymère comportant un système pigmentaire selon l'une des revendications 1 à 13.

18. Document de valeur, fibre colorée, fil de sécurité ou feuille de sécurité comportant un système pigmentaire selon l'une des revendications 1 à 13.

19. Document de valeur, fibre colorée, fil de sécurité ou feuille de sécurité selon la revendication 18, les différentes sortes de pigments luminescents encapsulés étant imprimés soit ensemble dans une encre mixte en un point, ou chacune séparément en des points différents.

20. Document de valeur ou feuille de sécurité selon la revendication 18 ou 19, les différentes sortes de pigments luminescents encapsulés formant une image luminescente en couleurs réelles.
